(19) **Europäisches Patentamt / European Patent Office / Office européen des brevets**

(11) **EP 4 712 493 A1**

(12) **EUROPEAN PATENT APPLICATION**

(43) Date of publication:
**18.03.2026 Bulletin 2026/12**

(21) Application number: **24306535.6**

(22) Date of filing: **17.09.2024**

(51) International Patent Classification (IPC):
**H04N 21/81** (2011.01)

(52) Cooperative Patent Classification (CPC):
**H04N 21/816; H04N 21/8146**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **COVA REGATEIRO, João Pedro 35220 CHATEAUBOURG (FR)**

• **GOSSELIN, Philippe Henri 35235 THORIGNE-FOUILLARD (FR)**
• **SRIR, Mohamed Ali 35510 CESSON-SEVIGNE (FR)**
• **AVRIL, Quentin 35830 BETTON (FR)**
• **LE CLERC, Francois 35590 L'HERMITAGE (FR)**

(74) Representative: **Interdigital Immeuble ZEN 2 845 A, avenue des Champs Blancs 35510 Cesson-Sévigné (FR)**

(54) **SIGNALING NEURAL RADIANCE FIELD PROPERTIES IN AVATAR JSON INTERCHANGE FILE FORMAT**

(57) Some embodiments of a method may include: obtaining Avatar JSON Interchange File (AJIF) data; decoding the AJIF data to generate avatar data and associated neural radiance field properties; obtaining user movement data corresponding to a movement of a user; generating updated avatar data based on the user movement data by using a neural networked configured with the neural radiance field properties; and sending the updated avatar data to a client device. Another method may include: generating AJIF data corresponding to an avatar; sending, to an application server, the AJIF data; obtaining user movement data corresponding to a movement of a user; sending, to the application server; receiving, from the application server, scene update data, wherein the scene update data includes updated avatar data corresponding to the movement of the user; and rendering a scene update based on the scene update data.

FIG. 4

**Description**

**CROSS-REFERENCE TO OTHER APPLICATIONS**

The present application incorporates by reference in their entirety the following applications: European Patent Application Serial No. EP23306745 entitled "AVATAR MEDIA REPRESENTATION FOR TRANSMISSION" and filed October 10, 2023 ("'745 *application*"); European Patent Application Serial No. EP23306756 entitled "GEOMETRY AVATAR MEDIA CODEC FOR TRANSMISSION" and filed October 28, 2023 ("'756 *application*")*;* European Patent Application Serial No. TBD-1, entitled "AVATAR MEDIA REPRESENTATION FOR TRANSMISSION" and filed January 15, 2024; European Patent Application Serial No. TBD-2, entitled "GEOMETRY AVATAR MEDIA CODEC FOR TRANSMISSION" and filed January 15, 2024; and European Patent Application Serial No EP24305094.5 entitled "AVATAR JSON INTERCHANGE FILE FORMAT" and filed January 15, 2024.

**BACKGROUND**

Extended reality (XR) is a technology enabling interactive experiences where the real-world environment and/or a video content is enhanced by virtual content, which can be defined across multiple sensory modalities, including visual, auditory, haptic, etc. During runtime of the application, the virtual content (3D content or audio/video file for example) is rendered in real-time in a way which is consistent with the user context (environment, point of view, device, etc.). Scene graphs (such as the one proposed by Khronos / glTF and its extensions defined in MPEG Scene Description format or Apple / USDZ for instance) are a possible way to represent the content to be rendered. They combine a declarative description of the scene structure linking real-environment objects and virtual objects on one hand, and binary representations of the virtual content on the other hand.

There are currently many formats for encoding 3D content including mesh rigs, e.g. deformable 3D objects using weights. One can find formats like FBX, USD or glTF, for instance. None of these formats are dedicated to avatar data: in most cases this is up to the application to interpret the data that might relate to an avatar, in either of the currently existing formats and how to parse and utilize it. To this date and our knowledge there is no available dedicated avatar open format that includes neural radiance field (NeRF) properties encoding. So there is a lack for a solution that encodes avatar properties in association with related NeRF properties in a unique Avatar Interchange File Format, in a human readable file format, for example based on JSON.

**SUMMARY**

A first example method in accordance with some embodiments may include: obtaining Avatar JSON Interchange File (AJIF) data; decoding the AJIF data to generate avatar data and associated neural radiance field properties; obtaining animation parameters from the avatar data; obtaining user movement data corresponding to a movement of a user; generating updated avatar data based on the user movement data by using the neural radiance field properties; and sending the updated avatar data to a client device.

Some embodiments of the first example method may further include generating avatar animation rendering data using the animation parameters generated by a neural networked configured with the neural radiance field properties;

For some embodiments of the first example method, the user movement data is face landmark data.

For some embodiments of the first example method, generating the updated avatar data may include: obtaining blendshape weight updates corresponding to the face landmark data; and applying the blendshape weight updates to the avatar data to generate the updated avatar data.

For some embodiments of the first example method, generating the updated avatar data may include: obtaining, from the avatar data, vertex position data associated with an avatar; obtaining, from the avatar data, linear blend skinning weights; obtaining, from the avatar data, a transformation matrix; and generating the updated avatar data using the neural networked configured with the neural radiance field properties.

For some embodiments of the first example method, the animation parameters may include a channel object corresponding to a portion of an avatar.

Some embodiments of the first example method may further include analyzing the avatar data to determine what type of avatar is represented in the avatar data and the neural radiance field properties.

Some embodiments of the first example method may further include analyzing the avatar data to determine an avatar parts mapping of the avatar data.

Some embodiments of the first example method may further include analyzing the avatar data to determine at least one node in the avatar data associated with an avatar.

For some embodiments of the first example method, the AJIF data may include data for at least one of the following data types related to the avatar: raw avatar data, geometry data, texture data, skeleton data, controller data, and level of detail (LOD) data.

For some embodiments of the first example method, the AJIF data may include data for at least one of the following data types: file node data, metadata, and file asset data.

For some embodiments of the first example method, the AJIF data corresponds to two or more files.

For some embodiments of the first example method, the AJIF data may include image data associated with the avatar.

A first example apparatus in accordance with some embodiments may include: a processor; and a non-transitory computer-readable medium storing instructions operative, when executed by the processor, to cause the apparatus to perform any one of the methods listed above.

A second example method in accordance with some embodiments may include: generating Avatar JSON Interchange File (AJIF) data corresponding to an avatar associated with neural radiance field properties; sending, to an application server, the AJIF data; obtaining user movement data corresponding to a movement of a user by using a neural network configured with the neural radiance field properties; sending, to the application server, the user movement data corresponding to the movement of the user; receiving, from the application server, scene update data, wherein the scene update data comprises updated avatar data corresponding to the movement of the user; and rendering an update to a scene based on the received scene update data.

For some embodiments of the second example method, the user movement data is face landmark data.

A second example apparatus in accordance with some embodiments may include: a processor; and a non-transitory computer-readable medium storing instructions operative, when executed by the processor, to cause the apparatus to perform any one of the methods listed above.

A third example method in accordance with some embodiments may include: obtaining Avatar JSON Interchange File (AJIF) data; decoding the AJIF data to generate avatar data; obtaining animation parameters from the avatar data; obtaining user movement data corresponding to a movement of a user; generating updated avatar data based on the user movement data; and rendering the updated avatar data to a display device.

Some embodiments of the third example method may further include generating avatar animation rendering data using the animation parameters.

For some embodiments of the third example method, the user movement data is face landmark data.

For some embodiments of the third example method, generating the updated avatar data may include: obtaining blendshape weight updates corresponding to the face landmark data; and applying the blendshape weight updates to the avatar data to generate the updated avatar data.

For some embodiments of the third example method, generating the updated avatar data may include: obtaining, from the avatar data, vertex position data associated with an avatar; obtaining, from the avatar data, linear blend skinning weights; obtaining, from the avatar data, a transformation matrix; and generating the updated avatar data using the vertex position data, the linear blend skinning weights, and the transformation matrix.

For some embodiments of the third example method, the animation parameters may include a channel object corresponding to a portion of an avatar.

Some embodiments of the third example method may further include analyzing the avatar data to determine what type of avatar is represented in the avatar data.

Some embodiments of the third example method may further include analyzing the avatar data to determine an avatar parts mapping of the avatar data.

Some embodiments of the third example method may further include analyzing the avatar data to determine at least one node in the avatar data associated with an avatar.

For some embodiments of the third example method, the AJIF data comprises data for at least one of the following data types related to the avatar: raw avatar data, geometry data, texture data, skeleton data, controller data, and level of detail (LOD) data.

For some embodiments of the third example method, the AJIF data may include data for at least one of the following data types: file node data, metadata, and file asset data.

For some embodiments of the third example method, the AJIF data corresponds to two or more files.

For some embodiments of the third example method, the AJIF data may include image data associated with the avatar.

A third example apparatus in accordance with some embodiments may include: a processor; and a non-transitory computer-readable medium storing instructions operative, when executed by the processor, to cause the apparatus to perform the method of any one of claims 18 through 30.

A fourth example method in accordance with some embodiments may include: obtaining Avatar JSON Interchange File (AJIF) data; decoding the AJIF data to generate avatar data; obtaining animation parameters from the avatar data; receiving face landmark data corresponding to a face movement of a user; generating updated avatar data based on the face landmark data; and sending the updated avatar data to a client device.

A fourth example apparatus in accordance with some embodiments may include: a processor; and a non-transitory computer-readable medium storing instructions operative, when executed by the processor, to cause the apparatus to any one of the methods listed above.

A fifth example method in accordance with some embodiments may include: obtaining identity data regarding an avatar; generating high-level information data using the identity data; encoding the high-level information data; obtaining skeleton data regarding an avatar; generating mesh, mappings, and skeleton information data using the skeleton data; encoding the mesh, mappings, and skeleton information data; obtaining animation data regarding an avatar; generating controllers information data using the animation data; encoding the controllers information data; obtaining appearance data regarding an avatar; generating textures information data using the appearance data; encoding the textures information data; receiving a request to save avatar data; compressing the encoded high-level information data, the encoded mesh, mappings, and skeleton information data, the encoded controllers information data, and the encoded textures information data to generate compressed avatar data; and sending the compressed avatar data.

A fifth example apparatus in accordance with some embodiments may include: a processor; and a non-transitory computer-readable medium storing instructions operative, when executed by the processor, to cause the apparatus to perform any one of the methods listed above.

A sixth example apparatus in accordance with some embodiments may include at least one processor configured to perform any one of the methods listed above.

A seventh example apparatus in accordance with some embodiments may include a computer-readable medium storing instructions for causing one or more processors to perform any one of the methods listed above.

An eighth example apparatus in accordance with some embodiments may include at least one processor and at least one non-transitory computer-readable medium storing instructions for causing the at least one processor to perform any one of the methods listed above.

A signal in accordance with some embodiments may include updated avatar data associated with neural radiance field properties generated according to any one of the methods listed above.

## BRIEF DESCRIPTION OF THE DRAWINGS

FIG. 1A is a system diagram illustrating an example communications system according to some embodiments.

FIG. 1B is a system diagram illustrating an example wireless transmit/receive unit (WTRU) that may be used within the communications system illustrated in FIG. 1A according to some embodiments.

FIG. 1C is a system diagram illustrating an example set of interfaces for a system according to some embodiments.

FIG. 2A is a functional block diagram of block-based video encoder, such as an encoder used for Versatile Video Coding (VVC), according to some embodiments.

FIG. 2B is a functional block diagram of a block-based video decoder, such as a decoder used for VVC, according to some embodiments.

FIG. 3A is a schematic side view illustrating an example waveguide display that may be used with extended reality (XR) applications according to some embodiments.

FIG. 3B is a schematic side view illustrating an example alternative display type that may be used with extended reality applications according to some embodiments.

FIG. 3C is a schematic side view illustrating an example alternative display type that may be used with extended reality applications according to some embodiments.

FIG. 4 is a process diagram illustrating example top-level encoding and decoding processes according to some embodiments.

FIG. 5 is a file data map showing an example .ajif file mapping according to some embodiments.

FIG. 6 is a schematic illustration showing an example avatar mesh model according to some embodiments.

FIG. 7 is a schematic illustration showing an example avatar skeleton model according to some embodiments.

FIG. 8 is a process diagram illustrating an example encoder architecture according to some embodiments.

FIG. 9 is a process diagram illustrating an example decoder architecture according to some embodiments.

FIG. 10 is a process diagram illustrating an example process for streaming an AJIF file according to some embodiments.

FIG. 11 is a process diagram illustrating an example video conferencing architecture with AJIF format data according to some embodiments.

FIG. 12 is a message sequence chart illustrating an example process for a video conferencing use case according to some embodiments.

FIG. 13 is a system diagram illustrating an example set of interfaces for immersive experiences with one or more users/avatars according to some embodiments.

FIG. 14 is a system diagram illustrating an example set of interfaces for virtual worlds with multiple online users/avatars according to some embodiments.

FIG. 15 is a message sequence chart illustrating an example process for asset creation workflow between a client and a server application according to some embodiments.

FIG. 16 is an illustration showing an example outcome of an asset creation process related to an avatar representation according to some embodiments.

FIG. 17 is a flowchart illustrating an example process for decoding Avatar JSON Interchange File (AJIF) data according to some embodiments.

FIG. 18 is a flowchart illustrating an example process for encoding Avatar JSON Interchange File (AJIF) data according to some embodiments.

Fig. 19 illustrates a face mesh whose vertices are generated by a model in the list of "models".

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

## DETAILED DESCRIPTION

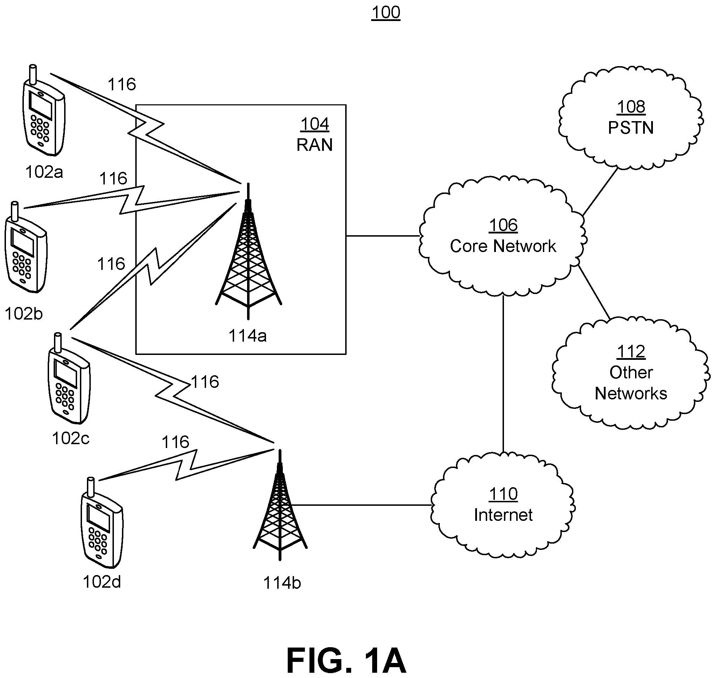

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104/113 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106 may be in direct or indirect communication with other RANs that employ the same RAT as the RAN 104/113 or a different RAT. For example, in addition to being connected to the RAN 104/113, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

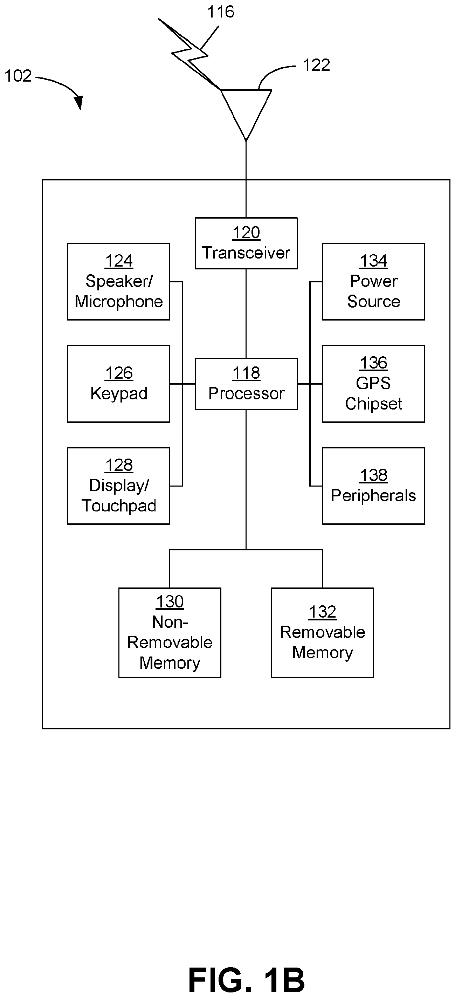

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the downlink (e.g., for reception)).

Although the WTRU is described in FIGs. 1A-1B as a wireless terminal, it is contemplated that in certain representative embodiments that such a terminal may use (e.g., temporarily or permanently) wired communication interfaces with the communication network.

In representative embodiments, the other network 112 may be a WLAN.

In view of FIGs. 1A-1B, and the corresponding description, one or more, or all, of the functions described herein may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

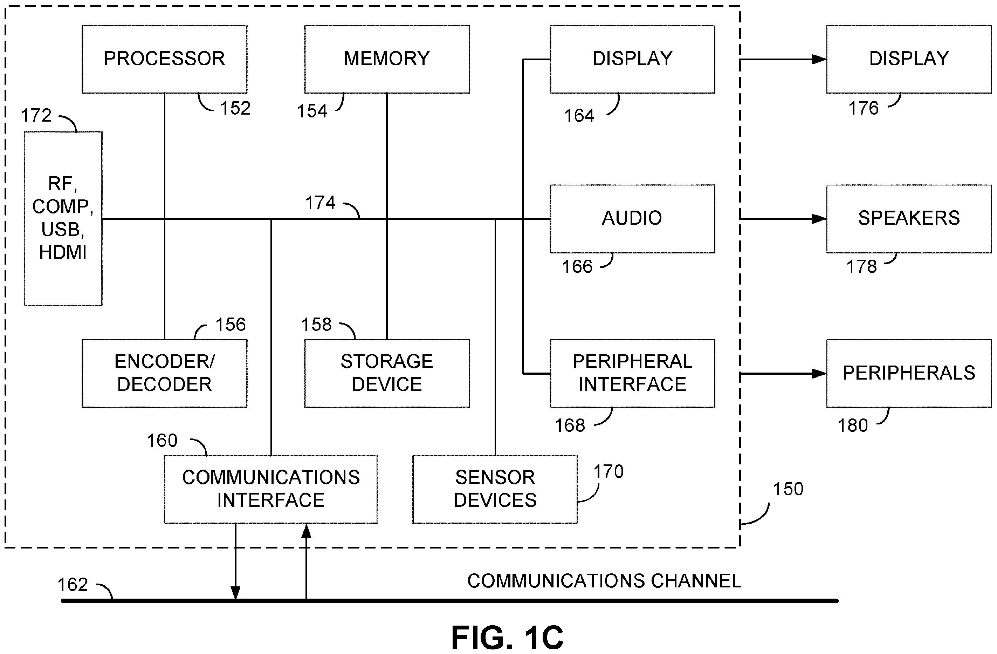

FIG. 1C is a system diagram illustrating an example set of interfaces for a system according to some embodiments. An extended reality display device, together with its control electronics, may be implemented for some embodiments. System 150 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 150, singly or in combination, can be embodied in a single integrated circuit (IC), multiple ICs, and/or discrete components. For example, in at least one embodiment, the processing and encoder/decoder elements of system 150 are distributed across multiple ICs and/or discrete components. In various embodiments, the system 150 is communicatively coupled to one or more other systems, or other electronic devices, via, for example, a communications bus or through dedicated input and/or output ports. In various embodiments, the system 150 is configured to implement one or more of the aspects described in this document.

The system 150 includes at least one processor 152 configured to execute instructions loaded therein for implementing, for example, the various aspects described in this document. Processor 152 may include embedded memory, input output interface, and various other circuitries as known in the art. The system 150 includes at least one memory 154 (e.g., a volatile memory device, and/or a non-volatile memory device). System 150 may include a storage device 158, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 158 can include an internal storage device, an attached storage device (including detachable and non-detachable storage devices), and/or a network accessible storage device, as non-limiting examples.

System 150 includes an encoder/decoder module 156 configured, for example, to process data to provide an encoded video or decoded video, and the encoder/decoder module 156 can include its own processor and memory. The encoder/decoder module 156 represents module(s) that can be included in a device to perform the encoding and/or decoding functions. As is known, a device can include one or both of the encoding and decoding modules. Additionally, encoder/decoder module 156 can be implemented as a separate element of system 150 or can be incorporated within processor 152 as a combination of hardware and software as known to those skilled in the art.

Program code to be loaded onto processor 152 or encoder/decoder 156 to perform the various aspects described in this document can be stored in storage device 158 and subsequently loaded onto memory 154 for execution by processor 152. In accordance with various embodiments, one or more of processor 152, memory 154, storage device 158, and encoder/decoder module 156 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 152 and/or the encoder/decoder module 156 is used to store instructions and to provide working memory for processing that is needed during encoding or decoding. In other embodiments, however, a memory external to the processing device (for example, the processing device can be either the processor 152 or the encoder/decoder module 152) is used for one or more of these functions. The external memory can be the memory 154 and/or the storage device 158, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 150 can be provided through various input devices as indicated in block 172. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1C, include composite video.

In various embodiments, the input devices of block 172 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 150 to other electronic devices across USB and/or HDMI connections. It is to be understood that various aspects of input processing, for example, Reed-Solomon error correction, can be implemented, for example, within a separate input processing IC or within processor 152 as necessary. Similarly, aspects of USB or HDMI interface processing can be implemented within separate interface ICs or within processor 152 as necessary. The demodulated, error corrected, and demultiplexed stream is provided to various processing elements, including, for example, processor 152, and encoder/decoder 156 operating in combination with the memory and storage elements to process the datastream as necessary for presentation on an output device.

Various elements of system 150 can be provided within an integrated housing, Within the integrated housing, the various elements can be interconnected and transmit data therebetween using suitable connection arrangement 174, for example, an internal bus as known in the art, including the Inter-IC (I2C) bus, wiring, and printed circuit boards.

The system 150 includes communication interface 160 that enables communication with other devices via communication channel 162. The communication interface 160 can include, but is not limited to, a transceiver configured to transmit and to receive data over communication channel 162. The communication interface 160 can include, but is not limited to, a modem or network card and the communication channel 162 can be implemented, for example, within a wired and/or a wireless medium.

Data is streamed, or otherwise provided, to the system 150, in various embodiments, using a wireless network such as a Wi-Fi network, for example IEEE 802.11 (IEEE refers to the Institute of Electrical and Electronics Engineers). The Wi-Fi signal of these embodiments is received over the communications channel 162 and the communications interface 160 which are adapted for Wi-Fi communications. The communications channel 162 of these embodiments is typically connected to an access point or router that provides access to external networks including the Internet for allowing streaming applications and other over-the-top communications. Other embodiments provide streamed data to the system 150 using a set-top box that delivers the data over the HDMI connection of the input block 172. Still other embodiments provide streamed data to the system 150 using the RF connection of the input block 172. As indicated above, various embodiments provide data in a non-streaming manner. Additionally, various embodiments use wireless networks other than Wi-Fi, for example a cellular network or a Bluetooth network.

The system 150 can provide an output signal to various output devices, including a display 176, speakers 178, and other peripheral devices 180. The display 176 of various embodiments includes one or more of, for example, a touchscreen display, an organic light-emitting diode (OLED) display, a curved display, and/or a foldable display. The display 176 can be for a television, a tablet, a laptop, a cell phone (mobile phone), or other device. The display 176 can also be integrated with other components (for example, as in a smart phone), or separate (for example, an external monitor for a laptop). The other peripheral devices 180 include, in various examples of embodiments, one or more of a stand-alone digital video disc (or digital versatile disc) (DVR, for both terms), a disk player, a stereo system, and/or a lighting system. Various embodiments use one or more peripheral devices 180 that provide a function based on the output of the system 150. For example, a disk player performs the function of playing the output of the system 150.

In various embodiments, control signals are communicated between the system 150 and the display 176, speakers 178, or other peripheral devices 180 using signaling such as AV.Link, Consumer Electronics Control (CEC), or other communications protocols that enable device-to-device control with or without user intervention. The output devices can be communicatively coupled to system 150 via dedicated connections through respective interfaces 164, 166, and 168. Alternatively, the output devices can be connected to system 150 using the communications channel 162 via the communications interface 160. The display 176 and speakers 178 can be integrated in a single unit with the other components of system 150 in an electronic device such as, for example, a television. In various embodiments, the display interface 164 includes a display driver, such as, for example, a timing controller (T Con) chip.

The display 176 and speaker 178 can alternatively be separate from one or more of the other components, for example, if the RF portion of input 172 is part of a separate set-top box. In various embodiments in which the display 176 and speakers 178 are external components, the output signal can be provided via dedicated output connections, including, for example, HDMI ports, USB ports, or COMP outputs.

The system 150 may include one or more sensor devices 168. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 150 is used as the control module for an extended reality display (such as control modules 124, 132), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 152 or by hardware, or by a combination of hardware and software. As a non-limiting example, the embodiments can be implemented by one or more integrated circuits. The memory 154 can be of any type appropriate to the technical environment and can be implemented using any appropriate data storage technology, such as optical memory devices, magnetic memory devices, semiconductor-based memory devices, fixed memory, and removable memory, as non-limiting examples. The processor 152 can be of any type appropriate to the technical environment, and can encompass one or more of microprocessors, general purpose computers, special purpose computers, and processors based on a multi-core architecture, as non-limiting examples.

## Block-Based Video Coding

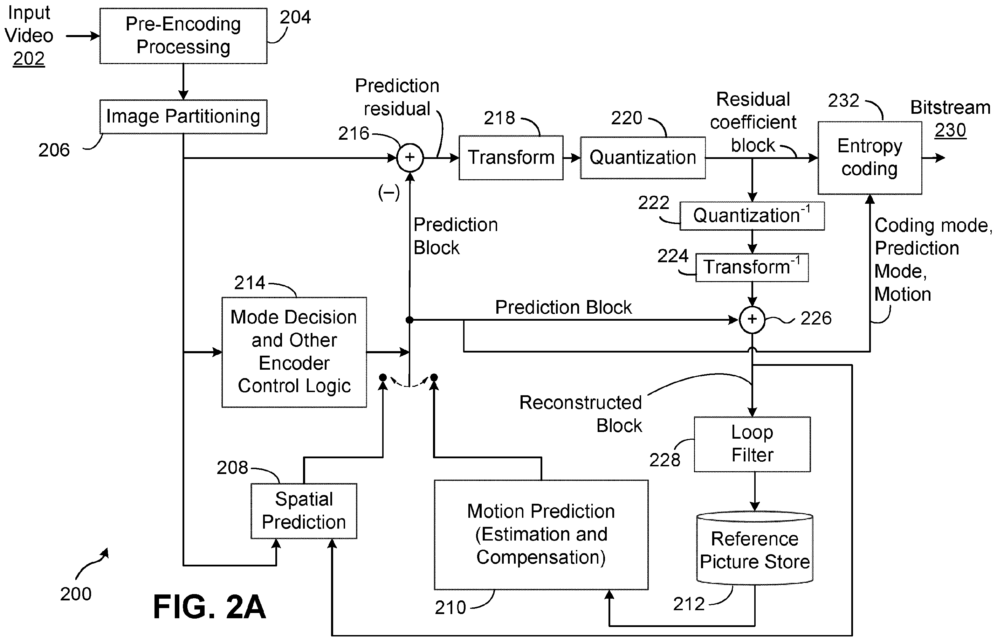

Like HEVC, the VVC is built upon the block-based hybrid video coding framework. FIG. 2A gives the block diagram of a block-based hybrid video encoding system 200. Variations of this encoder 200 are contemplated, but the encoder 200 is described below for purposes of clarity without describing all expected variations.

Before being encoded, a video sequence may go through pre-encoding processing 204, for example, applying a color transform to an input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing and attached to the bitstream.

The input video signal 202 including a picture to be encoded is partitioned 206 and processed block by block in units of, for example, CUs. Different CUs may have different sizes. In VTM-1.0, a CU can be up to 128x128 pixels. However, different from the HEVC which partitions blocks only based on quad-trees, in the VTM-1.0, a coding tree unit (CTU) is split into CUs to adapt to varying local characteristics based on quad/binary/ternary-tree. Additionally, the concept of multiple partition unit type in the HEVC is removed, such that the separation of CU, prediction unit (PU) and transform unit (TU) does not exist in the VVC-1.0 anymore; instead, each CU is always used as the basic unit for both prediction and transform without further partitions. In the multi-type tree structure, a CTU is firstly partitioned by a quad-tree structure. Then, each quad-tree leaf node can be further partitioned by a binary and ternary tree structure. Different splitting types may be used, such as quaternary partitioning, vertical binary partitioning, horizontal binary partitioning, vertical ternary partitioning, and horizontal ternary partitioning.

In the encoder of FIG. 2A, spatial prediction 208 and/or temporal prediction 210 may be performed. Spatial prediction (or "intra prediction") uses pixels from the samples of already coded neighboring blocks (which are called reference samples) in the same video picture/slice to predict the current video block. Spatial prediction reduces spatial redundancy inherent in the video signal. Temporal prediction (also referred to as "inter prediction" or "motion compensated prediction") uses reconstructed pixels from the already coded video pictures to predict the current video block. Temporal prediction reduces temporal redundancy inherent in the video signal. A temporal prediction signal for a given CU may be signaled by one or more motion vectors (MVs) which indicate the amount and the direction of motion between the current CU and its temporal reference. Also, if multiple reference pictures are supported, a reference picture index may additionally be sent, which is used to identify from which reference picture in the reference picture store 212 the temporal prediction signal comes.

The mode decision block 214 in the encoder chooses the best prediction mode, for example based on a rate-distortion optimization method. This selection may be made after spatial and/or temporal prediction is performed. The intra/inter decision may be indicated by, for example, a prediction mode flag. The prediction block is subtracted from the current video block 216 to generate a prediction residual. The prediction residual is de-correlated using transform 218 and quantized 220. (For some blocks, the encoder may bypass both transform and quantization, in which case the residual may be coded directly without the application of the transform or quantization processes.) The quantized residual coefficients are inverse quantized 222 and inverse transformed 224 to form the reconstructed residual, which is then added back to the prediction block 226 to form the reconstructed signal of the CU. Further in-loop filtering, such as deblocking/SAO (Sample Adaptive Offset) filtering, may be applied 228 on the reconstructed CU to reduce encoding artifacts before it is put in the reference picture store 212 and used to code future video blocks. To form the output video bit-stream 230, coding mode (inter or intra), prediction mode information, motion information, and quantized residual coefficients are all sent to the entropy coding unit (108) to be further compressed and packed to form the bit-stream.

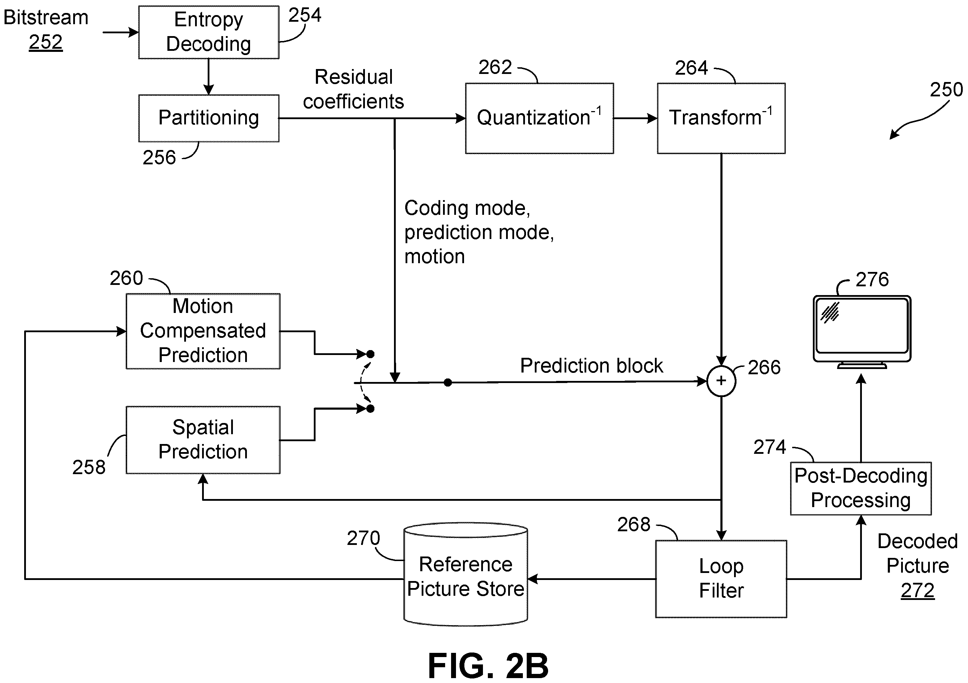

FIG. 2B gives a block diagram of a block-based video decoder 250. In the decoder 250, a bitstream is decoded by the decoder elements as described below. Video decoder 250 generally performs a decoding pass reciprocal to the encoding pass as described in FIG. 2A. The encoder 200 also generally performs video decoding as part of encoding video data.

In particular, the input of the decoder includes a video bitstream 252, which can be generated by video encoder 200. The video bit-stream 252 is first unpacked and entropy decoded at entropy decoding unit 254 to obtain transform coefficients, motion vectors, and other coded information. Picture partition information indicates how the picture is partitioned. The decoder may therefore divide 256 the picture according to the decoded picture partitioning information. The coding mode and prediction information are sent to either the spatial prediction unit 258 (if intra coded) or the temporal prediction unit 260 (if inter coded) to form the prediction block. The residual transform coefficients are sent to inverse quantization unit 262 and inverse transform unit 264 to reconstruct the residual block. The prediction block and the residual block are then added together at 266 to generate the reconstructed block. The reconstructed block may further go through in-loop filtering 268 before it is stored in reference picture store 270 for use in predicting future video blocks.

The decoded picture 272 may further go through post-decoding processing 274, for example, an inverse color transform (e.g. conversion from YCbCr 4:2:0 to RGB 4:4:4) or an inverse remapping performing the inverse of the remapping process performed in the pre-encoding processing 204. The post-decoding processing can use metadata derived in the pre-encoding processing and signaled in the bitstream. The decoded, processed video may be sent to a display device 276. The display device 276 may be a separate device from the decoder 250, or the decoder 250 and the display device 276 may be components of the same device.

Various methods and other aspects described in this disclosure can be used to modify modules of a video encoder 200 or decoder 250. Moreover, the systems and methods disclosed herein are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this disclosure can be used individually or in combination.

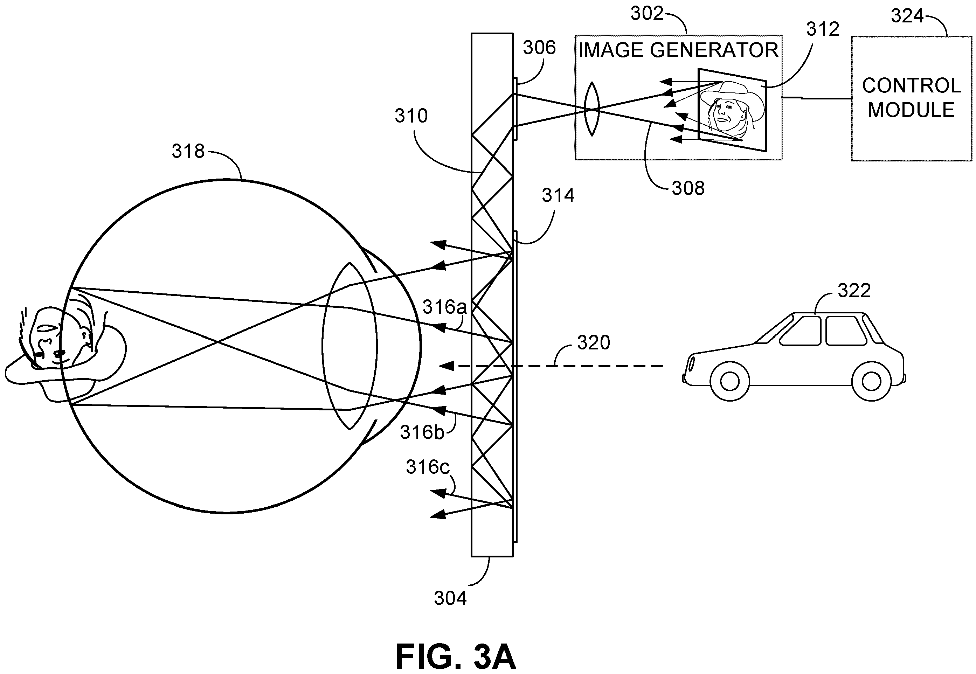

FIG. 3A is a schematic side view illustrating an example waveguide display that may be used with extended reality (XR) applications according to some embodiments. An image is projected by an image generator 302. The image generator 302 may use one or more of various techniques for projecting an image. For example, the image generator 302 may be a laser beam scanning (LBS) projector, a liquid crystal display (LCD), a light-emitting diode (LED) display (including an organic LED (OLED) or micro LED (μLED) display), a digital light processor (DLP), a liquid crystal on silicon (LCoS) display, or other type of image generator or light engine.

Light representing an image 312 generated by the image generator 302 is coupled into a waveguide 304 by a diffractive in-coupler 306. The in-coupler 306 diffracts the light representing the image 312 into one or more diffractive orders. For example, light ray 308, which is one of the light rays representing a portion of the bottom of the image, is diffracted by the in-coupler 306, and one of the diffracted orders 310 (e.g. the second order) is at an angle that is capable of being propagated through the waveguide 304 by total internal reflection. The image generator 302 displays images as directed by a control module 324, which operates to render image data, video data, point cloud data, or other displayable data.

At least a portion of the light 310 that has been coupled into the waveguide 304 by the diffractive in-coupler 306 is coupled out of the waveguide by a diffractive out-coupler 314. At least some of the light coupled out of the waveguide 304 replicates the incident angle of light coupled into the waveguide. For example, in the illustration, out-coupled light rays 316a, 316b, and 316c replicate the angle of the in-coupled light ray 308. Because light exiting the out-coupler replicates the directions of light that entered the in-coupler, the waveguide substantially replicates the original image 312. A user's eye 318 can focus on the replicated image.

In the example of FIG. 3A, the out-coupler 314 out-couples only a portion of the light with each reflection allowing a single input beam (such as beam 308) to generate multiple parallel output beams (such as beams 316a, 316b, and 316c). In this way, at least some of the light originating from each portion of the image is likely to reach the user's eye even if the eye is not perfectly aligned with the center of the out-coupler. For example, if the eye 318 were to move downward, beam 316c may enter the eye even if beams 316a and 316b do not, so the user can still perceive the bottom of the image 312 despite the shift in position. The out-coupler 314 thus operates in part as an exit pupil expander in the vertical direction. The waveguide may also include one or more additional exit pupil expanders (not shown in FIG. 3A) to expand the exit pupil in the horizontal direction.

In some embodiments, the waveguide 304 is at least partly transparent with respect to light originating outside the waveguide display. For example, at least some of the light 320 from real-world objects (such as object 322) traverses the waveguide 304, allowing the user to see the real-world objects while using the waveguide display. As light 320 from real-world objects also goes through the diffraction grating 314, there will be multiple diffraction orders and hence multiple images. To minimize the visibility of multiple images, it is desirable for the diffraction order zero (no deviation by 314) to have a great diffraction efficiency for light 320 and order zero, while higher diffraction orders are lower in energy. Thus, in addition to expanding and out-coupling the virtual image, the out-coupler 314 is preferably configured to let through the zero order of the real image. In such embodiments, images displayed by the waveguide display may appear to be superimposed on the real world.

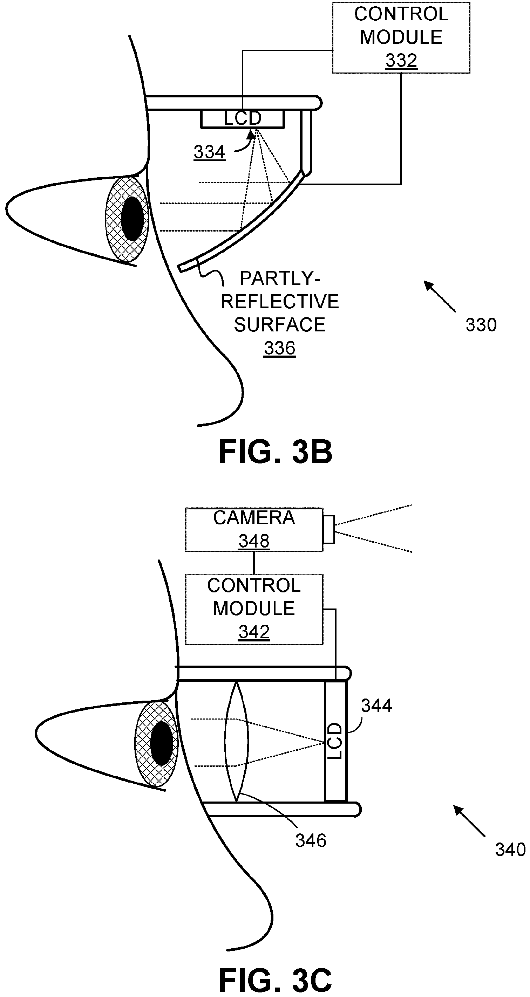

FIG. 3B is a schematic side view illustrating an example alternative display type that may be used with extended reality applications according to some embodiments. In an XR head-mounted display device 330, a control module 332 controls a display 334, which may be an LCD, to display an image. The head-mounted display includes a partly-reflective surface 336 that reflects (and in some embodiments, both reflects and focuses) the image displayed on the LCD to make the image visible to the user. The partly-reflective surface 336 also allows the passage of at least some exterior light, permitting the user to see their surroundings.

FIG. 3C is a schematic side view illustrating an example alternative display type that may be used with extended reality applications according to some embodiments. In an XR head-mounted display device 340, a control module 342 controls a display 344, which may be an LCD, to display an image. The image is focused by one or more lenses of display optics 346 to make the image visible to the user. In the example of FIG. 3C, exterior light does not reach the user's eyes directly. However, in some such embodiments, an exterior camera 348 may be used to capture images of the exterior environment and display such images on the display 344 together with any virtual content that may also be displayed.

The embodiments described herein are not limited to any particular type or structure of XR display device.

As discussed herein, a human readable format may be used to encode an avatar instance, such as an avatar encoded for a 3D scene representation.

There are currently many formats for encoding 3D content including mesh rigs, e.g., deformable 3D objects using weights. One can find formats like FBX, USD or glTF, for instance. As understood, none of these formats are dedicated to avatar data. Thus, an application must interpret the data to determine if the data may relate to an avatar in either of the currently existing formats as well as how to parse and utilize the data. As understood, there currently is no available dedicated avatar open format.

Recently, MPEG proposed an MPEG_node_avatar extension *([SD] Update of Annex H on Potential Improvement CDAM2 23090-14 document - Reference Avatar,* MPEG Meeting #143, Input Document m63997 (July 2023) (*"m63997"*)) for glTF, which defines a node being an avatar. Thanks to this extension, an application may know, for example: (1) which nodes in the file represent avatars (with the "isAvatar" property), (2) what kind of avatar is represented (with the "type" property), and (3) what are the parts of the avatar (with the "mappings" property). Although this information is welcome, there is still missing avatar-related information, like a semantic definition of morph targets, parametric textures, or different levels of details. Furthermore, because the glTF is dedicated to hardware optimization, some information is sometimes lost. For instance, glTF only handles triangles: it is not possible to store meshes made of quads in a glTF according to specification *glTF 2.0,* KHRONOS 3D FORMATS WORKING GROUP (2021) (*"glTF 2.0"*)*,* available at registry<dot>khronos<dot>org/glTF/specs/2.0/glTF-2.0<dot>pdf. The current introduction of the avatar concept in MPEG is also limited in terms of streaming capabilities. An avatar is constrained to be embedded in a scene description type of format, instead of having a self-dedicated, optimized for streaming, and interoperable format that MPEG standards rely on.

A new file format called Avatar JSON Interchange File (AJIF) is introduced herein. This format uses the extension ".ajif" and stores information about an avatar instance

## Encoding and Decoding

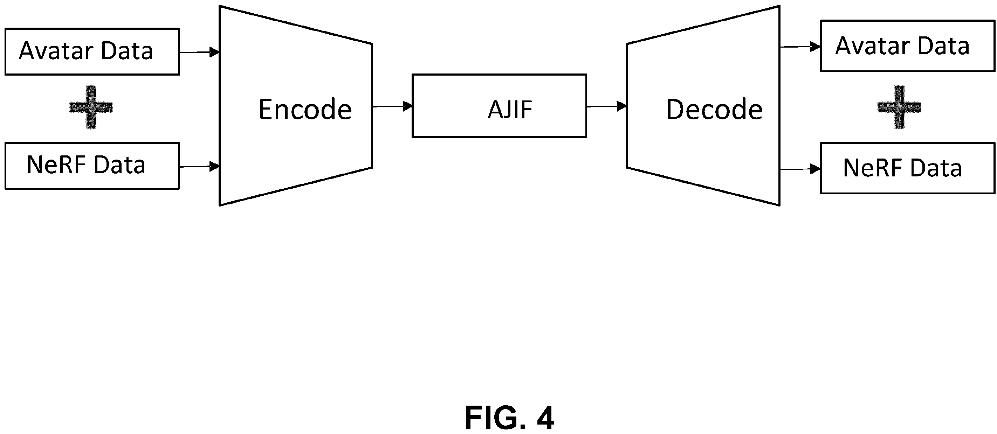

FIG. 4 is a process diagram illustrating example top-level encoding and decoding processes according to some embodiments of the present principles. Avatar data may be encoded and stored in an AJIF format. The AJIF formatted data may be passed through a decoder to obtain avatar data.

Avatar data is a set of formal information supported by any computer, like a string, an image, or a tensor. Avatar data may be formatted to respect some specifications. For instance, all integers may be 64-bit signed integers for some embodiments. As a result, if the original data is not exactly in this format, like 32-bit unsigned integers, some processing may be performed to format and/or build the avatar data. Depending on options for some embodiments, encoding may keep all the avatar data without loss, or lose part of the avatar data, or some floating precision. Fig. 4 illustrates the additional NeRF data as part of the avatar data. For sake of clarity, the two types of information are separated for illustration purposes, in practice the NeRF data may be part of the avatar data.

## Avatar Representation Data

For some embodiments, integer values are 64-bit signed integers, float values are IEEE 754 64-bit floats, and string content is encoded using UTF-8. Images are RGBA with float values. For some embodiments, the axis order for 2D coordinates may be (X, Y) or (U, V) and for 3D coordinates, the axis order may be (X, Y, Z).

For some embodiments, with regard to the orientation of 2D and 3D coordinates, a unit vector for each of the axes is of the same format, e.g., (X, Y) or (U, V) for 2D and (X, Y, Z) for 3D; and shall indicate the direction of the axis. AJIF uses a right-handed coordinate system. AJIF defines +Y as up, +Z as forward, and -X as right. The front of an AJIF asset faces +Z.

The AJIF format may store several avatar embodiments, each one being the same avatar, but with a different level of detail (LOD). For some embodiments, each level of detail of an avatar embodiment may contain one or more of the following data: high level avatar information; a list of the same avatar with different levels of detail; geometries; a skeleton skin; and a controller.

High level avatar information may include the following optional fields: Name, Identifier, Age, and Gender.

For a list with different levels of detail concerning the same avatar, each level may include the following optional fields: mesh, mappings, skeletons, and controllers. The mesh field may include one or more geometries, as defined below. The mappings field may include a list of string with associated geometries to identify the body parts. Skeletons field may include one or more skeleton skins, as defined below. Controllers may include one or more controllers, as defined below.

A geometry may include the following items: vertices, faces, normals, blendshapes, and textures. Vertices may include a list of 3D float coordinates corresponding to vertex coordinates. Faces may include a list of tuples, where each value in a tuple is a vertex index. Tuples can have between 3 and 256 values. The normals field may include: a list of 3D float coordinates corresponding to vertex normal coordinates; and/or a list of tuples, where each value in a tuple is a normal index. Tuples may have between 3 and 256 values. The blendshapes field may include a list of blendshapes, in which each includes the following items: displacements, name, code syntax (CS), and side. Displacements may include a list of 3D float displacements, each displacement being associated with a vertex. The name field may be a string the name of the blendshape. The CS field may be a string with a corresponding code syntax ("facs:AU1"). The side field may be a string with a location hint, like "left", "top", among others.

The textures field may include a list of texture data, each one made of a type, uvs, faces, an image, and a basis. The type may include texture type, like albedo, normal, roughness, metalness, specular, height, opacity, ambient occlusion, refraction, emissive, and/or glossy. The items uvs may include a list of 2D float coordinates corresponding to UV coordinates. Faces may be a list of tuples, where each value in a tuple is uv index. Tuples can have between 3 and 256 values. An image may be a texture image, or a float tensor [image width, image height, 4]. The basis may include texture displacement maps, e.g., a list of image displacements, like a float tensor [image width, image height, image channels]. Each displacement may be associated with a string that describes the displacement.

A skeleton skin may include the following items: a root joint, a list of joints, and a list of skins weights. A list of skins weights may include: a mesh used by an avatar and a list of 3-tuples referencing a joint in the list of joints, a vertex in the mesh, and a scalar weight between zero and one. Each joint may include: a mapping, child joints, a transform, and a 4x4 float matrix. The mapping may be a string to identify the body location/semantic of the joint. A transform may perform scaling, then rotation, then translation. A 4x4 float matrix may be used for inverse binding.

A controller may include a mapping, an input, and channels. A mapping may be a string with a corresponding code syntax. An input may be a list of increasing input weights. Channels may be a list of controller channels. Each controller channel may include: an interpolation method, a component to animate, and a list of out value sets. An interpolation method be "LINEAR", "STEP", or "CUBICSPLINE". A component to animate may include: a transform for one or more geometries; a transform for one or more skeleton joints; blendshapes weights for one or more geometries; texture displacement weights for one or more textures; a weight for another controller; and a list of output value sets, where each value set corresponds to one value in the input weights. The number and meaning of values in each value set must be consistent with the component to animate and the interpolation method.

**AJIF Structure**

According to the present principles, the AJIF structure may have the following content shown in Table 1a.

**Table 1a.**

| Name | Type | Description | Required |
|------|------|-------------|----------|
| Capture | CaptureData[1-*] | Information about the capture parameters of the avatar. | No |
| data | RawData[1 -*] | List of *RawData* | No |
| geometries | Geometry[1-*] | List of *Geometry* | No |
| nodes | Node[1-*] | List of *Node* | No |
| textures | Texture[1-*] | List of *Texture* | No |
| skeletons | Skeleton [1-*] | List of *Skeleton* | No |
| controllers | Controller[1 -*] | List of *Controller* | No |

(continued)

| Name | Type | Description | Required |
|------|------|-------------|----------|
| lods | LOD[1-*] | List of *LOD* | No |
| metadata | Metadata | Metadata about the avatar | No |
| asset | Asset | Information about the file | Yes |
| models | Models [1-*] | Information about the neural network model of the avatar | No |

In Table 1a, all items/content but "metadata" and "asset" are collections of items. Each collection is a list of items that may be referenced with their index in the list, in which the first index is zero. For instance, if the *"nodes"* collection contains three items, then a reference to the first one has an index of 0; a reference to the second one has an index of 1; and a reference to the third one has an index of 2. These items may be found in other lists.

A LOD contains all the data for the avatar at a given level of detail as shown in Table 1b:

**Table 1b.**

| Name | Type | Description | Required |
|------|------|-------------|----------|
| name | string | LOD name. | No |
| lod | integer | Indicates the level of details. Lower values correspond to higher level of details. | No, default 0 |
| mesh | integer | References a node in the *"nodes"* collection. | No |
| nerf | NeRFModel[1-*] | A list of NeRF models to render the avatar LOD. | No |
| skeletons | integer [1-*] | List of references to skeletons in the *"skeletons"* collection. | No |
| controllers | integer [1-*] | List of references to controllers in the "controllers" collection. | No |

The nerf attribute refers to nerf model that represents, controls and/or generates parts of the avatar.

**NeRF Representation Data**

A NeRFModel is defined using the properties in table 1c.

**Table 1c.**

| Name | Type | Description | Required |
|------|------|-------------|----------|
| model | Integer | References an item in the "models" collection. | Yes |
| parameters | Integer | References an item in the "capture" collection. | No |
| rays | Ray[1-*] | List of ray samples. | No |
| box | Float [6] | Bounding box surrounding the object to be used to generate the min and max of each ray. | No |

The "model" property is a reference to a model in the collection of models. This model must be a NeRF model with "type" equals to "networks" and a description and purpose that reflect a neural radiance field model (e.g. "description" as "NeRF model for rendering avatar heads" and "proposed" as "urn:mpeg:avatar:model:headgenerator"). The "parameters" property is a reference to data used to learn the model, including camera parameters and the 3D scene representation as a point cloud. The "rays" property defines the number of rays to be sampled and the proprieties of each ray. The "box" property defines the bounding volume of the scene, which is used to determine the minimum and maximum sampling values of each ray. The ray will intersect two points of the box and these two points determine the minimum sampling value (first intersections) and the maximum sampling value (second intersection). If "box" property is used, it has priority over any other threshold sampling values. If the property "rays" is not present the property "parameters" must reference a valid capture object that contains at least camera intrinsic and extrinsic information to allow the decoder to recompute the rays and associated data.

**Ray Definition**

A Ray is defined using the properties in table 1d.

**Table 1d.**

| Name | Type | Description | Required |
|---|---|---|---|
| samples | Integer | Number of samples along the ray. | Yes |
| origin | Float[3] | Ray 3D world space position. | Yes |
| rayDirection | Float[3] | Ray 3D direction. | Yes |
| viewDirection | Float[3] | Camera view direction. | Yes |
| min | Float | Ray minimum distance near place. | No |
| max | Float | Ray maximum distance far plane. | No |
| whiteBackground | Bool | True is the background is white False otherwise. | No |
| importance | Integer | Nb of additional iterations to sample along the ray. | No |

The "samples" property defines the number of samples to perform along the ray between the minimum and maximum threshold values. The "origin" property defines the 3D world space coordinates of the ray. The "rayDirection" property defines the 3D directional vector of the ray. This might not be the same direction values as of the camera (viewDirection). The "rayDirection" has priority over the "viewDirection", nevertheless both can be considered in some application. The "viewDirection" property defines the 3D directional vector of a camera view. The "min" property defines the minimum distance to start the sampling of the ray, this can also be referred to as to the "near plane". The "max" property defines the maximum distance to start the sampling of the ray, this can also be referred to as to the "far plane". The "whiteBackground" property signals if the background is white or not. This is application relevant when sampling rays on empty or white spaces. The "importance" property defines how many additional iterations to perform over a single ray. If "box" is available, min and max are not used and instead replaced with the values of the box.

**Single file mode**

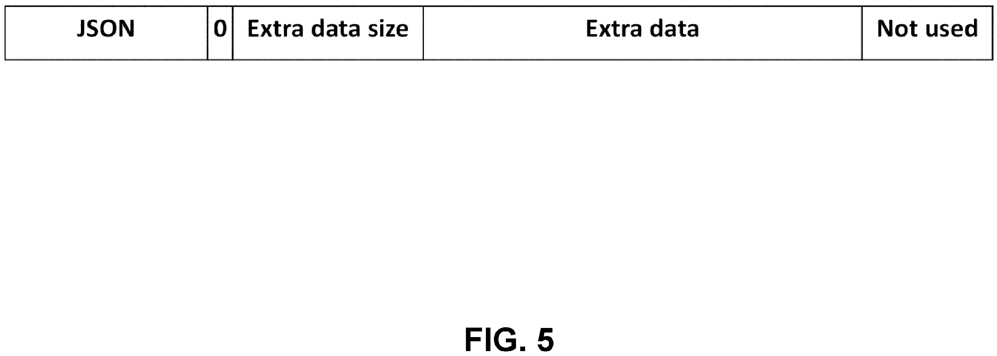

FIG. 5 is a file data map showing an example .ajif file mapping according to some embodiments. For some embodiments, the default encoding mode is based on a main JSON file (the .ajif file) and (eventually) one or more other files that contain extra data, like vertices or images. Using base64 encoding, all extra data may be put into the .ajif file. The .ajif file may refer to parts of files to retrieve data. A referred-to file may be the .ajif file itself, such as in FIG. 5. As a result, the extra data may be put after the JSON content in the .ajif file. Using this structure, JSON data is correctly encoded, and the end of the JSON data may be determined using the fact that the root of the JSON data is a JSON object. The "not used" field in FIG. 5 may be anything (such as zero-padding or non-AJIF data) which is not used by AJIF.

Everything in the .ajif file may be encoded and additional information may be included. In this mode, the beginning of the .ajif file (the "JSON" field in FIG. 5) is the main JSON content followed by a byte with a zero value. This terminal byte ("0" in FIG. 5) defines the end of the JSON part, which does not need to be valid JSON data. Eight bytes ("Extra data size" in FIG. 5) may follow the byte with a zero value and contain a 64-bit little-endian unsigned integer that defines the size of the "Extra data" binary data. For some embodiments, the exact number of extra data bytes may be cached into memory.

**AJIF features and benefits**

The AJIF format is only dedicated to the encoding of a single avatar. Contrary to generic scene description formats, there is no need to parse the file to determine that the file is for an avatar. For many generic formats, parsing is mandatory to determine if the file contains one or more avatars. For some embodiments of AJIF, there is one and only one avatar, so there is no need to parse.

AJIF provides avatar related information that may not be found in generic format and in most avatar-dedicated formats. AJIF is not limited to human avatars. Also, a part of the body or a full body may be encoded. AJIF is an open format.

Encoding is not bound to hardware considerations. The main purpose of AJIF is not limited to only renderers but may be used by all computer graphics applications. A decoded avatar representation may be converted to be used by an internal application since the avatar representation is based on a generic Avatar Data representation associated with their NeRF Data.

The data may be merged into a single file or spread across several files in many ways. Depending on use cases, this freedom may improve user experience and save resources. For instance, it is possible to put all lod-related extra data into separate files. As such, the application may load only the file related to the lod(s) needed.

**RawData definition**

A RawData item may include low-level content, like tensors or images, as shown in Table .

Table 2.

| Name | Type | Description | Required |
|---|---|---|---|
| name | string | RawData name. | No |
| type | string | Data type: "dense", "sparse", or "image" | Yes |
| uri | string | Data content or reference to the data content (depends on type). | Yes |
| offset | integer | Offset in data content. | No, default 0 |
| byte Length | integer | Number of byte to use in data content. | No, default is content size |
| If type is "dense" { | | | |
| dims | integer[1-*] | Dimension of tensor | Yes |
| dtype | string | Type of values, like "f32", "f64", "i8", ... | Yes |
| } | | | |
| If type is "sparse" { | | | |
| dims | integer[1-*] | Dimension of tensor | Yes |
| count | integer | Number of a 2-tuple (index, value) in data content | Yes |
| dtype | string | Type of values, like "f32", "f64", "i8", ... | Yes |
| itype | string | Type of indices, like "i32", "i64", ... | Yes |
| } | | | |
| If type is "image" { | | | |
| mimeType | string | Image mime type, like "image/png" | No |
| dims | integer[2] | Image size | No |
| ctype | string | Type of colors, like "RGB", "YUV", ... | No |
| dtype | string | Type of color values, like "f32", "f64", "i8", ... | No |
| } | | | |
| If type is "tuples" { | | | |
| count | integer | Number of tuples | No |
| dtype | string | Type of tuple values, like "f32", "f64", "i8", ... | Yes |
| itype | string | Type of tuple sizes, like "i32", "i64", ... | Yes |
| } | | | |

**uri definition**

The "uri" property contains or references a binary content. The usage and interpretation of this content depends on other properties. If the "uri" property starts with "data:application/ajif-buffer;base64," then the following character is a base64 encoding of the data. For instance, the uri "data:application/ajif-buffer;base64,TWFueSBoYW5kcyB-tYWtlIGxpZ2h0IHdvcmsu" contains the base64 encoded data "TWFueSBoYW5kcyBtYWtlIGxpZ2h0IHdvcmsu". By interpreting this data field as a UTF-8 string, the data field may be decoded as "Many hands make light work."
If the "uri" starts with "http:" or "https:", then the "uri" is interpreted as a URL, and the data must be downloaded from this URL. If the "uri" property does not start with "data:", "http:", or "https:", the "uri" contains a file path relative to the path of the AJIF. The file contains the data. For other "uri" values, the decoding is not defined.

This "urii" property may be the same as the "uri" property in glTF buffers, e.g., and may respect the specification Berners-Lee, T., et al., Uniform Resource Identifier (URI): Generic Syntax, STD 66, RFC 3986, DOI 10.17487/RFC3986 (Jan. 2005), available at rfc-editor<dot>org/info/rfc3986 ("RFC 3986"). For some embodiments, encoding is a subset of RFC 3986.

### offset and byteLength definitions

If the "offset" and the "byteLength" properties are not present, then all of the binary content provided by the "uri" property is used.

If the "byteLength" property is present but not the "offset" property, then only the first "byteLength" bytes of the binary content provided by the "uri" property is used. For instance, if "uri" provides 3 bytes (23, 17, 240), "byteLength" is 2, and there is no "offset", then the content to consider is (23, 17).

If the "offset" property is present but not the "byteLength" property, then the "offset" first bytes are ignored in the binary content provided by the "uri" property. For instance, if "uri" provide 3 bytes (23,17,240), "offset" is 1 and there is no "byteLength", then the content to consider is (17, 240).

If the "offset" and "byteLength" properties are present, then only the "byteLength" bytes from "offset" considered in the binary content provided by the "uri" property. For instance, if "uri" provide 3 bytes (23,17,240), "offset" is 1 and "byteLength" is 1, then the content to consider is (17).

### dense tensor encoding

If "type" is "dense", the item contains a tensor (or multidimensional array). In this case, the tensor is represented using all the values of the tensor.

The "dims" property defines the tensor dimensions, from left to right. The total number of values in the tensor is the product of these dimensions. For instance, if "dims" is [2, 7, 4], then the first dimension is 2, the second dimension is 7, and the third dimension is 4. The total number of values in this example is 2 * 7 * 4 = 56.

The "dtype" property defines the type of values in the tensor. If "dtype" is "i8", then the values in the tensor are 8-bit signed integers. If "dtype" is "u8", then the values in the tensor are 8-bit unsigned integers. If "dtype" is "i16", then the values in the tensor are 16-bit signed little-endian integers. If "dtype" is "u16", then the values in the tensor are 16-bit unsigned little-endian integers. If "dtype" is "i32", then the values in the tensor are 32-bit signed little-endian integers. If "dtype" is "u32", then the values in the tensor are 32-bit unsigned little-endian integers. If "dtype" is "i64", then the values in the tensor are 64-bit signed little-endian integers. If "dtype" is "u64", then the values in the tensor are 64-bit unsigned little-endian integers. If "dtype" is "f16", then the values are IEEE 754 16-bit floating-point numbers. If "dtype" is "f32", then the values are IEEE 754 32-bit floating-point numbers. If "dtype" is "f64", then the values are IEEE 754 64-bit floating-point numbers.

The values of the tensor are decoded from the binary content obtained from "uri", "offset" and "byteLength". The ordering of values in the binary content is row-major. For instance, if the binary content contains bytes [3, 17, 23, 1] and "dtype" is "u16", then the decoded values are [3 + (17 * 256), 23 + (1 * 256)] = [4355, 279].

### sparse tensor encoding

If "type" is "sparse", the item contains a tensor (or multidimensional array). In this case, the tensor is represented with a list of 2-tuples (index, value), where index is the location of the value in the tensor. An index is the 1D indexing of cells in a tensor. For tensors with more than one dimension, the 1D indexing is obtained thanks to a "flattening" of the tensor, knowing that the ordering of values is row-major. For example, if the dimensions of the tensor is [a, b, c], then the 1D-index of the 3D-index (x, y, z) is (x * b + y) * c + z.

The "count" property defines the number of 2-tuples (index, value). This property is optional and may be used to know the size of the list without having to decode the binary content.

The "dims" property defines the tensor dimensions, from left to right. The total number of values in the tensor is the product of these dimensions. For instance, if "dims" is [2, 7, 4], then the first dimension is 2, the second dimension is 7 and the third dimension is 4. The total number of values in this example is then 2 * 7 * 4 = 56.

The "dtype" property defines the type of values in the tensor. If "dtype" is "i8", then the values in the tensor are 8-bit signed integers. If "dtype" is "u8", then the values in the tensor are 8-bit unsigned integers. If "dtype" is "i16", then the values in the tensor are 16-bit signed little-endian integers. If "dtype" is "u16", then the values in the tensor are 16-bit unsigned little-endian integers. If "dtype" is "i32", then the values in the tensor are 32-bit signed little-endian integers. If "dtype" is "u32", then the values in the tensor are 32-bit unsigned little-endian integers. If "dtype" is "i64", then the values in the tensor are 64-bit signed little-endian integers. If "dtype" is "u64", then the values in the tensor are 64-bit unsigned little-endian integers. If "dtype" is "f16", then the values are IEEE 754 16-bit floating-point numbers. If "dtype" is "f32", then the values are IEEE 754 32-bit floating-point numbers. If "dtype" is "f64", then the values are IEEE 754 64-bit floating-point numbers.

The "itype" property defines the type of indices in a 2-tuple list. If "itype" is "i8", then the values in the tensor are 8-bit signed integers. If "itype" is "u8", then the values in the tensor are 8-bit unsigned integers. If "itype" is "i16", then the values in the tensor are 16-bit signed little-endian integers. If "itype" is "u16", then the values in the tensor are 16-bit unsigned little-endian integers. If "itype" is "i32", then the values in the tensor are 32-bit signed little-endian integers. If "itype" is "u32", then the values in the tensor are 32-bit unsigned little-endian integers. If "itype" is "i64", then the values in the tensor are 64-bit signed little-endian integers. If "itype" is "u64", then the values in the tensor are 64-bit unsigned little-endian integers.

The 2-tuples (index, value) of the sparse tensor are decoded from the binary content obtained from "uri", "offset" and "byteLength". The "count" tuples are decoded one after another, e.g., (index1, value1, index2, value2, ...). For instance, if the binary content contains bytes [29, 3, 17, 7, 23, 1], "dtype" is "u16", and "itype" is "i8", then the decoded tuples are [(29, 4355), (7, 279)].

**image encoding**

If "type" is "image", the item contains an image, e.g., a 2D array of pixel values in a specific color space.

If "mimeType" is not present, then the "dims", "ctype" and "dtype" properties must be present. The "dims" property in the size of the image [width, height]. The "ctype" defines the format of pixels. If "ctype" is "RGB", then there are red, green, and blue pixels. If "ctype" is "RGBA", then there are red, green, blue, and alpha pixels.

The "dtype" property defines the type of pixel values. If "dtype" is "i8", then the values in the tensor are 8-bit signed integers. If "dtype" is "u8", then the values in the tensor are 8-bit unsigned integers. If "dtype" is "i16", then the values in the tensor are 16-bit signed little-endian integers. If "dtype" is "u16", then the values in the tensor are 16-bit unsigned little-endian integers. If "dtype" is "i32", then the values in the tensor are 32-bit signed little-endian integers. If "dtype" is "u32", then the values in the tensor are 32-bit unsigned little-endian integers. If "dtype" is "i64", then the values in the tensor are 64-bit signed little-endian integers. If "dtype" is "u64", then the values in the tensor are 64-bit unsigned little-endian integers. If "dtype" is "f16", then the values are IEEE 754 16-bit floating-point numbers. If "dtype" is "f32", then the values are IEEE 754 32-bit floating-point numbers. If "dtype" is "f64", then the values are IEEE 754 64-bit floating-point numbers.

For instance, if "ctype" is "RGB" and "dtype" is "f32", then each pixel has three 32-bit floating values.

The binary content obtained from "uri", "offset" and "byteLength" contains the pixel values of the image. The ordering of values in the binary content is row-major.

For instance, if the binary content contains bytes [3, 17, 23, 1, 3, 7, 9, 8, 2, 7, 5, 3], "dims" is (2, 2), "ctype" is "RGB" and "dtype" is "u8", then the decoded values are as follows. Pixel (0,0) has red = 3, green = 17, and blue = 23. Pxel (0,1) has red=1, green=3, blue=7. Pixel (1,0) has red=9, green=8, blue=2. Pixel (1,1) has red=7, green=5, blue=3.

If "mimeType" is present, the binary content obtained from "uri", "offset" and "byteLength" contains an image encoded with the corresponding mimeType. For instance, if "mimeType" is "image/png", then the binary content is image encoded using the PNG file format.

For formats that encode the dimension of the image, the "dims" property is not required. Otherwise, "dims" contains the dimension of the image. For formats that encode the pixel format of the image, the "ctype" property is not required. Otherwise, "ctype" contains the pixel format. For formats that encode the type of pixel values, the "dtype" property is not required. Otherwise, "dtype" contains the type of pixel values.

**tuples encoding**

If "type" is "tuples", the item contains a list of tuples. Each tuple has the same type of value, may have a different number of values, and may have 0 or more values. If the "count" property is present, the "count" property contains the number of tuples in the list.

The "dtype" property defines the type of values in the tuples. If "dtype" is "i8", then the values in the tensor are 8-bit signed integers. If "dtype" is "u8", then the values in the tensor are 8-bit unsigned integers. If "dtype" is "i16", then the values in the tensor are 16-bit signed little-endian integers. If "dtype" is "u16", then the values in the tensor are 16-bit unsigned little-endian integers. If "dtype" is "i32", then the values in the tensor are 32-bit signed little-endian integers. If "dtype" is "u32", then the values in the tensor are 32-bit unsigned little-endian integers. If "dtype" is "i64", then the values in the tensor are 64-bit signed little-endian integers. If "dtype" is "u64", then the values in the tensor are 64-bit unsigned little-endian integers. If "dtype" is "f16", then the values are IEEE 754 16-bit floating-point numbers. If "dtype" is "f32", then the values are IEEE 754 32-bit floating-point numbers. If "dtype" is "f64", then the values are IEEE 754 64-bit floating-point numbers.

The "itype" property defines the type of indices in the tuples. If "itype" is "i8": values in the tensor are 8-bit signed integers. If "itype" is "u8": values in the tensor are 8-bit unsigned integers. If "itype" is "i16": values in the tensor are 16-bit signed little-endian integers. If "itype" is "u16": values in the tensor are 16-bit unsigned little-endian integers. If "itype" is "i32": values in the tensor are 32-bit signed little-endian integers. If "itype" is "u32": values in the tensor are 32-bit unsigned little-endian integers. If "itype" is "i64": values in the tensor are 64-bit signed little-endian integers. If "itype" is "u64": values in the tensor are 64-bit unsigned little-endian integers.

The binary content obtained from "uri", "offset", and "byteLength" contains the tuples. Each tuple is encoded as (tuple size, tuple value1, tuple value2, ...). For instance, if the binary content contains bytes [1, 3, 17, 2, 23, 1, 18, 29], "dtype" is "u16" and "itype" is "u8", then there are two tuples: (4355) and (279, 7442).

**Geometry definition**

A Geometry object defines a mesh with associated properties as shown in Table 3.

Table 3.

| Name | Type | Description | Required |
|---|---|---|---|
| name | string | Geometry name. | No |
| vertices | integer | References an item in the *"data"* collection. The referenced item must be a float tensor [number of vertices, 3]. | Yes |
| normals | integer | References an item in the *"data"* collection. The referenced item must be a float tensor [number of vertices, 3]. | No |
| uvs | integer[1-*] | List of references to an item the "*data*" collection. The i-th referenced item must be a float tensor [number of uvs(i), 2]. | No |
| faces | Faces | A Faces object. | No |
| blendshapes | Blendshape[1-*] | List of *Blendshape.* | No |
| textures | Texture[1-*] | List of *Texture.* | No |

The "vertices" property references a tensor V with the vertices of the mesh, where V(i) = (x, y, z) are the X, Y, Z coordinates of the vertex of index i.

The "normals" property references a tensor N with the vertex normals of the mesh, where N(i) = (x, y, z) are the X, Y, Z coordinates of the normal of index i.

The "uvs" property references a list of tensors U(j) with the vertices of the mesh, where U(j)(i) = (u, v) are the U, V coordinates of the uv of index i of the uvs set of index j.

The "faces" property contains indices for each face of the mesh (see Faces definition below).

The "blendshapes" property contains a list of blendshapes (or morph targets). See *Blendshapes* definition below.

The "textures" property contains a list of textures. See *Textures* definition below.

**Faces definition**

The Faces object define indices for each face of the mesh as shown in Table 4.

Table 4.

| Name | Type | Description | Required |
|---|---|---|---|
| vertices | integer | References an item in the *"data"* collection. The referenced item must be a float tensor [number of faces, 3-256] or a list of tuples, where tuples must have between 3 and 256 values. | No |
| normals | integer | References an item in the *"data"* collection. The referenced item must be a float tensor [number of faces, 3-256] or a list of tuples, where tuples must have between 3 and 256 values. | No |
| uvs | integer[1-*] | List of references of items in the "*data*" collection. Each referenced item must be a float tensor [number of faces, 3-256] or a list of tuples, where tuples must have between 3 and 256 values. | No |

Each property of the Faces object references an item (or a list of items) in the "data" collection that represents indices for each face of the mesh. Each of these items must have the same layout, e.g., they are all consistent with the same topology. If all faces have the same number of edges, then each item must be a tensor with dimensions [number of faces, number of edges] or a list of tuples with the same number of tuples and where all tuples have three values. If faces are allowed to have different numbers of edges, then each item must be a list of tuples with the same number of tuples and each tuple has the same number of values. Each item has the same layout, but not necessarily the same values.

If present, the "vertices" property references an item with the vertex indices of each face. If the "vertices" property is not present, then the default vertices of each face is the one in ascending order, for instance, (0,1,2), (3,4,5,6), (7,8,9,), ...

If present, the "normals" property references an item with the normal indices of each face. If the "normals" property is not present, then the normal indices are equal to the vertex indices.

If present, the "uvs" property contains a list of references to items with UV indices of each face. If the "uvs" property is not present, then UV indices are equal to the vertex indices.

### Blendshape definition

A Blendshape object contains data regarding a blendshape (or mesh deformation or morph target) and related data, as shown in Table 5.

**Table 5.**

| Name | Type | Description | Required |
|------|------|-------------|----------|
| name | string | Blendshape name. | No |
| displacements | integer | References an item in the *"data"* collection. The referenced item must be a float tensor [number of vertices, 3]. | Yes |
| mapping | string | Indicates a corresponding coding syntax mapping e.g., ("facs:AU1","facs:AU2" ...). | No |
| side | string | Hint about the location of the blendshape ("left", "top", ...) | No |

The "displacements" property references a float tensor D that contains a displacement vector for each vertex of the geometry, e.g., D(i) = (x, y, z) is the displacement for vertex i.

The "mapping" property contains a string that indicates a corresponding coding syntax. For instance, "facs:AU1" could indicate that the blendshape is based on the FACS blendshapes "AU1" (*FACS Cheat Sheet,* MELINDAOZEL<DOT>COM, available at melindaozel<dot>com/facs-cheat-sheet/ (last visited Jan. 6, 2024) (*"FACS"*))*.*

The "side" property contains a string that gives a hint about the location of the blendshape. For instance, "left" could indicate that the blendshape concerns the left side of the geometry.

### Texture definition

A Texture object defines a texture and related data, as shown in Table 6.

**Table 6.**

| Name | Type | Description | Required |
|------|------|-------------|----------|
| name | string | Texture name. | No |
| type | string | Texture type, like "albedo", "specular", etc. | Yes |
| uvs | integer | References one of the UV coordinates in the geometry (see "uvs" and "faces" properties). | Yes |
| image | integer | References an item in the *"data"* collection. The referenced item must be an image. | Yes |
| basis | TextureDisplacement[1-*] | A list of *TextureDisplaments.* | No |

The "type" property defines the texture type and consequently its usage. The "type" property may be based on PBR textures type, like "albedo" or "specular".

The "uvs" property references UV coordinates in the geometry (in the "uvs" list of the parent *Geometry* object) and UV face indices in the geometry (in the "uvs" list in the "faces" property of the parent *Geometry* object). The reference is the index in the lists in the geometry properties. For example, if the "uvs" property is 1, then the "uvs" property refers the second item in the "uvs" list in the geometry and in the "uvs" list in the "faces" property of the geometry.

The "image" property references an image in the "data" collection. If there is no "basis" property, the texture image is this image. If there is a "basis" property, then the texture image is parametric, and may be computed as shown in Eq. 1:

$$texture = clamp(textureBase + \sum_i weight_i \times textureTarget_i) \qquad (1)$$

in which:

- *textureBase* is the image provided by the "image" property.
- *textureTarget$_i$* is the displacement provided by the item of index i in the "basis" property.
- *weight$_i$* is floating value, provided by the application.
- *clamp*() is a function to ensure that the texture values are in a valid color value range.

**TextureDisplacement definition**

A TextureDisplament object contains data regarding a texture displacement (or texture target) and related data, as shown in Table 7.

**Table 7.**

| Name | Type | Description | Required |
|---|---|---|---|
| name | string | Texture displacement name. | No |
| displacements | integer | References an item in the *"data"* collection. The referenced item must be a float tensor. | Yes |
| mapping | string | Describe the texture displacement. | No |

The "displacements" property references a float tensor in the "data" collection. The dimension of the tensor must be consistent with the dimension of the image provided by the "image" property in the parent *Texture.* For instance, if the image has size (width, height) and RGB channels, the displacement tensor must be (width, height, 3).
The "mapping" property describes the texture displacement.

**Node definition**

A Node object contains data to organize, merge and describe and transform components, as shown in Table 8.

**Table 8.**

| Name | Type | Description | Required |
|---|---|---|---|
| name | string | Node name. | No |
| mapping | string | Indicates the body part | No |
| geometry | integer | References a geometry in the *"geometries"* collection. | No |
| children | integer[1-*] | List of references to nodes in the *"nodes"* collection. | No |
| scale | float[3] | The node's non-uniform scale, given as the scaling factors along the x, y, and z axes. | No, default [1,1,1] |
| rotation | float[4] | The node's unit quaternion rotation in the order (x, y, z, w), where w is the scalar. | No, default [0,0,0,1] |
| translation | float[3] | The node's translation along the x, y, and z axes. | No, default [0,0,0] |
| matrix | float[16] | A floating-point 4x4 transformation matrix stored in column-major order. | No, default: [1,0,0,0,0,1,0, 0,0,0,1,0,0,0,0 ,1] |

The "mapping" property indicates the body part, like "full_body/upper_body/right_arm".

The "geometry" property references a geometry in the "geometries" collection.

The "children" property is a list of node indices that defines the children of this node. Node children are correct as long as they don't create any circular dependencies.

The "scale" property defines the node's non-uniform scale, given as the scaling factors along the x, y, and z axes. The "matrix" property may not be present if this one is present.

The "rotation" property defines node's unit quaternion rotation in the order (x, y, z, w), where w is the scalar. The "matrix" property may not be present if this one is present.

The "translation" property defines node's translation along the x, y, and z axes. The "matrix" property may not be present if this one is present.

If "scale", "rotation" or "translation" are present, they are applied in the following order: scale, then rotate, and finally translate.

The "matrix" property defines a floating-point 4x4 transformation matrix stored in column-major order. "scale", "rotation" and "translation" may not be present if this one is present.

**Node, mesh and geometries**

A mesh in a node may have all of the properties found in a merge of the properties of a node and its descendants. This is only possible if the node or at least one of its descendants references a geometry. The merge of properties is the concatenation of all properties found during a depth-first traversal of the node hierarchy.

**Skeleton definition**

A Skeleton object defines an avatar skeleton, as shown in Table 9.

**Table 9.**

| Name | Type | Description | Required |
|---|---|---|---|
| name | string | Skin name. | No |
| mapping | string | To identify the skeleton purpose. | No |
| root | integer | References a node in the *"nodes"* collection. Defines the skeleton root. | No |
| joints | integer[1-*] | List of references to nodes in the *"nodes"* collection. | Yes |
| inverseBindMa trices | integer | References an item in the *"data"* collection. The referenced item must be a float tensor [joint count, 4, 4] | No |
| skinnings | integer[1-*] | List of *Skinning.* | No |

The "mapping" property defines the skeleton purpose.

The "root" property references a node in the "nodes" collection and defines the skeleton root. The node must be the closest common root of the joints hierarchy or a direct or indirect parent node of the closest common root.

The "joints" property is a list of references to nodes in the "nodes" collection. These nodes are used as joints in this skeleton.

The "inverseBindMatrices" references a float tensor B in the "data" collection. The tensor dimensions must be consistent with the "joints" property, e.g., [joint count, 4, 4].

The "skinnings" property is a list of *Skinning* objects (see below).

**Skinning definition**

A Skinning object defines the skin joints weight in a geometry, as shown in Table 10.

**Table 10.**

| Name | Type | Description | Required |
|---|---|---|---|
| name | string | Skinning name. | No |
| mapping | string | To identify the skinning semantics on the mesh. | No |
| mesh | integer | References a node in the "nodes" collection. | Yes |

(continued)

| Name | Type | Description | Required |
|------|------|-------------|----------|
| weights | integer | References an item in the *"data"* collection. The referenced item must be a float tensor [vertex count, joint count]. | Yes |
| influence | float | Scalar value to measure the influence of the weight matrix over the vertices. | Yes |

The "mapping" property defines the skinning semantics on the mesh.

The "mesh" property references a node in the "nodes". The node or at least one of its descendants must reference a geometry. The resulting mesh is the concatenation of all geometries found during a depth-first traversal of the node hierarchy.

The "weights" property references a float tensor in the "data" collection. The tensor has two dimensions, in which the first dimension is the number of vertices in the mesh provided by the "mesh" property, and the second dimension is the number of joints in the parent skeleton.

**Multiple Skinning Interpolation**

Linear blend skinning is defined as shown in Eq. 2:

$$v = \sum_{i=1}^{n} w_i T_i v^b \qquad (2)$$

in which *v* is the result vertex position. Component w is a scalar weight defined in attribute "weights" in Table 10. Component $v^b$ is the rest/binding pose of the vertex defined by the "mesh" attribute in Table 10. Component *T* is the transformation matrix of bone *i* and is defined as "inverseBindMatrices" above. Component n is the number of bones associated with the vertex *v'*. The influence of all the bones over one vertex shall sum up to one as shown in Eq. 3:

$$\sum_{i=1}^{n} w_i = 1 \qquad (3)$$

In the presence of several skinning weight matrices, Eq. 4 may be derived:

$$v' = v + v'' \qquad (4)$$

in which $v'' = \sum_{i=1}^{n} w''_i T_i v^b$, and so linear blend skinning becomes a linear combination of positions. In practice, each *v'* is a displacement vector from the rest pose *v''*, so the possibility of a linear combination of displacement vectors is assumed, as the previous formula (Eq. 4) illustrates. To this end, the attribute "skinnings" in Table 9 is a list of weighted matrices w that may be linear combined as shown in Eq. 5:

$$v' = v + v'' + \cdots + v^n \qquad (5)$$

in which, each *v* is a displacement vector resulting from varying the weighted matrix w in the first formulation, and n is the number of matrices to combine.

This approach facilitates the separation of animations using linear blend skinning and uses the ability to mix different schemas into one model e.g., deformation of the body at the joints combined with muscle deformations. To this end, a scalar attribute $\omega$, in Table 10, is used to measure the influence of each weighted matrix w, as shown in Eq. 6:

$$v' = \omega v + \omega'' v'' + \cdots + \omega^n v^n \qquad (6)$$

**Controller definition**

A Controller object defines components to animate the avatar, as shown in Table 11.

**Table 11.**

| Name | Type | Description | Required |
|---|---|---|---|
| name | string | Controller name. | No |
| mapping | string | To identify the controller type or semantics. | No |
| input | integer | References an item in the *"data"* collection. The referenced item must be a 1D tensor with increasing values. | No |
| channels | Channel[1-*] | List of *Channel*. | Yes |

The "mapping" property identifies the controller type or semantics.

The "input" property references a 1D tensor T with increasing values, e.g., for any j > i, T[j] >= T[i]. The "input" property defines the input weights. If not present, the input weights are [0,1].

The "channels" property is a list of Channel (see below).

A controller animates the avatar applying all the transformation in the channels.

**Channel definition**

A Channel object defines data to animate a part of the avatar, or another controller, as shown in Table 12.

**Table 12.**

| Name | Type | Description | Required |
|---|---|---|---|
| node | integer | References a node in the "nodes" collection. | No |
| path | string | Identifies a component in the node referenced by "node". | No |
| controller | integer | References a controller in the "controllers" collection. | No |
| interpolation | string | Defines an interpolation method. | No, default is "LINEAR" |
| output | integer | References an item in the *"data"* collection. The referenced item must be a tensor. The dimension of the tensor depends on the other properties. | Yes |

A channel targets a component in the avatar or another controller. For the scale of a node, "node" must reference a node and "path" must point to a "scale". In this case, the weight size is 3, and the scale of the node is animated by the channel. For the rotation of a node, "node" must reference a node and "path" must point to a "rotation" value. In this case, the weight size is 4, and the rotation of the node is animated by the channel. For the translation of a node, "node" must reference a node and "path" must point to a "translation" value. In this case, the weight size is 3 and the translation of the node is animated by the channel. For the matrix of a node, "node" must reference a node and "path" must point to a "matrix". In this case, the weight size is 16 and the matrix transform of the node is animated by the channel.

For the blendshape weights of a node, "node" must reference a node which references a geometry or at least one descendant which references a geometry. In this case, the weight size is the total number of blendshapes found in the mesh built through a depth-first traversal of the node hierarchy. The order of the weights and thus the blendshape to weight index correspondence also depends on the mesh built through a depth-first traversal of the node hierarchy. The channel animates the blendshape weights.

For the texture displacement weights of a node, "node" must reference a node which references a texture with displacement(s) or at least one descendant which references a texture with displacement(s). In this case, the weight size is the total number of texture displacements found in the mesh built through a depth-first traversal of the node hierarchy. The order of the weights and thus the texture displacements to weight index correspondence also depends on the mesh built through a depth-first traversal of the node hierarchy. The channel animates the texture displacements weights.

For the weight of another controller, "controller" must reference another controller in the "controllers" collection/set. Such references must not lead to circular dependencies. If the "controller" property is present, the "node" and "path" properties must not be present (or are ignored for some embodiments). If the "node" property is present, "path" must be present and "controller" must not be present (or may be ignored for some embodiments). The "interpolation" property defines the interpolation method.

Given the input values (defined in the parent controller), the weights size (depends on the targeted component, as presented above), the interpolation method and the output values (defined in the "output" property), any output weights may be computed for any input weight between the minimum and the maximum input values. The method and algorithms are the same as the one defined in the *glTF* 2.0 specification.

Once output weights are computed for an input weight, they are used for the component targeted by "controllers" or ("node" + "path"). For instance, if the channel targets the rotation of a node, the output weights have four numbers used to rotate the node.

**LOD definition**

A LOD contains all the data for the avatar at a given level of detail, as shown in Table 13.

**Table 13.**

| Name | Type | Description | Required |
|---|---|---|---|
| name | string | LOD name. | No |
| lod | integer | Indicates the level of details. Lower values correspond to higher level of details. | No, default 0 |
| mesh | integer | References a node in the *"nodes"* collection. | No |
| skeletons | integer[1-*] | List of references to skeletons in the *"skeletons"* collection. | No |
| controllers | integer[1-*] | List of references to controllers in the "controllers" collection. | No |

The "lod" property indicates the level of detail. Lower values correspond to a higher level of detail. For instance, an lod property value of 0 has more details than an lod of 1.

The "mesh" property references a node in the "nodes" collection. The node or one of its descendants must reference a geometry. The avatar mesh at this lod is the merge of all properties found in a node and its descendants (see section 0).

The "skeletons" list references skeletons in the "skeletons" collection. Skeletons may be used to animate the avatar mesh at this lod.

The "controllers" list references controllers in the "controllers" collection. Controllers may be used to animate the avatar mesh at this lod.

**Metadata definition**

The "metadata" property contains general information about the avatar, as shown in Table 14.

**Table 14.**

| Name | Type | Description | Required |
|---|---|---|---|
| name | string | Avatar name. | No |
| id | string | Avatar identifier. | No |
| age | int | Avatar age. | No |
| gender | string | Avatar gender. | No |

The "name" property defines the name used to describe the avatar.

The "id" property defines a unique value that identifies the avatar. This value is not the id of a user, but a value used to distinguish the avatar from any other in the scope of a context, like an application or a virtual world.

The "age" property defines the age of the avatar.

The "gender" property defines the gender (or genders) of the avatar. The value of this property is not limited to "male" and "female", and may extend to any value relevant for applications.

Asset definition

The "asset" property contains encoding information, as shown in Table 15.

**Table 15.**

| Name | Type | Description | Required |
|------|------|-------------|----------|
| version | string | The AJIF version in the form of <major>.<minor>. | Yes |
| copyright | string | A copyright message suitable for display to credit the content creator. | No |
| generator | string | Tool that generated this AJIF model. | No |

The "version" property defines the version of the file. The "copyright" property contains a copyright message suitable for display to credit the content creator. The "generator" property indicates how the file was generated.

**AJIF Schema Example**

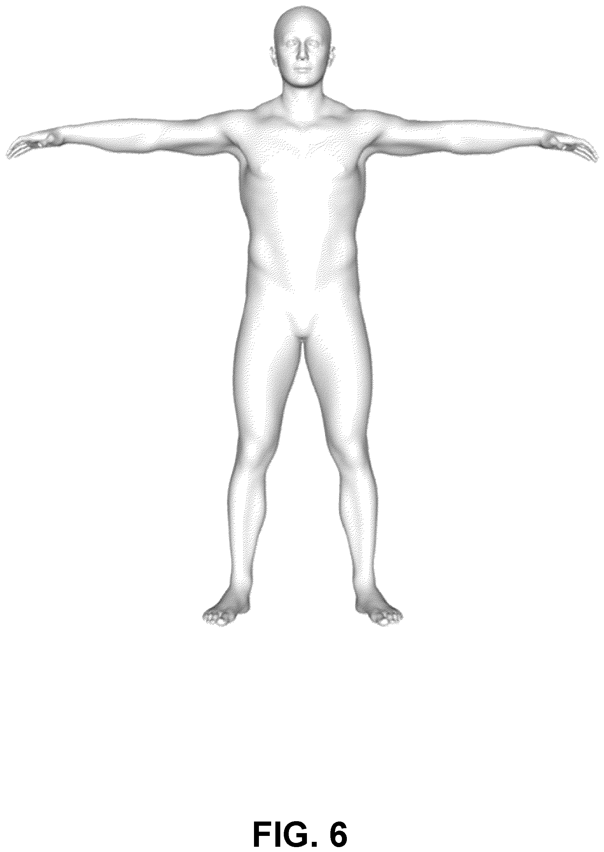

FIG. 6 is a schematic illustration showing an example avatar mesh model according to some embodiments. FIG. 6 shows an example full body mesh.

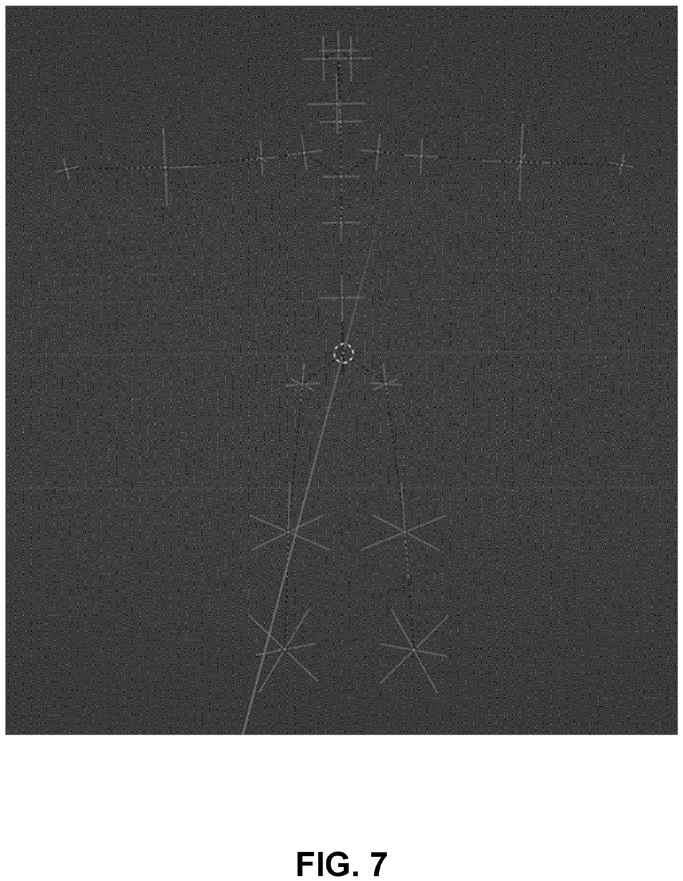

FIG. 7 is a schematic illustration showing an example avatar skeleton model according to some embodiments.

Table 16 shows an example code listing below shows a JSON format portion of an AJIF file.

```
{
  "asset": {
    "version": "1.0",
    "copyright": "Interdigital R&D"
  },
  "data": [
    {
      "name": "0_positions",
      "type": "dense",
      "dims": [53698, 3],
      "dtype": "f32",
      "uri": "0_positions.bin"
    },
    {
      "name": "0_normals",
      "type": "dense",
      "dims": [53698, 3],
```

```
    "dtype": "f32",
    "uri": "0_normals.bin"
   },
   {
    "name": "0_uvs0",
    "type": "dense",
    "dims": [53698, 2],
    "dtype": "f32",
    "uri": "0_uvs0.bin"
   },
   {
    "name": "0_faces",
    "type": "dense",
    "dims": [53496, 4],
    "dtype": "i32",
    "uri": "0_faces.bin"
   },
   {
    "name": "0_AU1_L",
    "type": "sparse",
    "dims": [53698, 3],
    "count": [1293],
    "dtype": "f32",
    "itype": "i16",
    "uri": "0_blendshapes.bin",
    "offset": 0,
    "byteLength": 28446
   },
   {
    "name": "0_AU1_R",
    "type": "sparse",
    "dims": [53698, 3],
    "count": [1293],
    "dtype": "f32",
    "itype": "i16",
    "uri": "0_blendshapes.bin",
    "offset": 28446,
    "byteLength": 28446
   },
   {
    "name": "0_albedo",
    "type": "image",
```

```
      "dtype": "f32",
      "ctype": "RGB",
      "uri": "0_albedo.png"
    },
    {
      "name": "0_albedo_displacements0",
      "type": "dense",
      "dims": [512, 512, 3],
      "dtype": "f32",
      "uri": "0_albedo_displacements.bin",
      "offset": 0,
      "byteLength": 3145728
    },
    {
      "name": "0_albedo_displacements1",
      "type": "dense",
      "dims": [512, 512, 3],
      "dtype": "f32",
      "uri": "0_albedo_displacements.bin",
      "offset": 3145728,
      "byteLength": 3145728
    }
  ],
  "geometries": [
    {
      "vertices": 0,
      "normals": 1,
      "uvs": [2],
      "faces": {
        "vertices": 3,
        "normals": 3,
        "uvs": [3]
      },
      "blendshapes": [
        {
          "name": "AU1_Inner_Brow_Raiser_L",
          "mapping": "facs:AU1",
          "side": "left",
          "displacements": 4
        },
        {
          "name": "AU1_Inner_Brow_Raiser_R",
```

```
      "mapping": "facs:AU1",
      "side": "right",
      "displacements": 5
    }
  ],
  "textures": [
    {
      "type": "albedo",
      "uvs": 0,
      "image": 6,
      "basis": [
        {
          "displacements": 7
        },
        {
          "displacements": 8
        }
      ]
    }
  ]
}
],
"nodes": [
  {
    "mapping": "full_body",
    "geometry": 0
  }, {
    "children": [2],
    "mapping": "Armature",
    "rotation": [0.70710683, 0, 0, 0.70710671]
  }, {
    "children": [3, 6, 9],
    "mapping": "Hips",
    "rotation": [3.698053e-06, -0.72200102, -0.69189197, 3.7579121e-06],
    "scale": [1, 0.99999982, 0.99992913]
  }, {
    "children": [4],
    "mapping": "UpperLeg_Left",
    "rotation": [-0.074827254, 0.89231223, -0.018994788, 0.44476873],
    "scale": [1, 1.0000001, 0.99999994],
    "translation": [-0.089999907, 0.06951081, -0.012969827]
  }, {
```

```
  "children": [5],
  "mapping": "LowerLeg_Left",
  "rotation": [0.025296636, -0.59710324, -0.036830336, 0.80091912],
  "scale": [1, 1.0000002, 1],
  "translation": [-3.6810326e-09, 0.34292775, -8.1619689e-09]
}, {
  "mapping": "Foot_Left",
  "rotation": [0.50041395, -0.71361715, 0.19108735, 0.45146662],
  "scale": [1.0000001, 1, 0.99999994],
  "translation": [-2.6078954e-08, 0.30331337, 3.6180154e-08]
}, {
  "children": [7],
  "mapping": "UpperLeg_Right",
  "rotation": [-0.074827455, -0.89231497, 0.018993765, 0.44476297],
  "scale": [0.99999988, 1.0000001, 1],
  "translation": [0.090000153, 0.06951084, -0.012967926]
}, {
  "children": [8],
  "mapping": "LowerLeg_Right",
  "rotation": [0.025296191, 0.59710503, 0.0368306, 0.80091774],
  "scale": [1, 0.99999994, 0.99999994],
  "translation": [9.1393204e-09, 0.34292778, 9.8767421e-09]
}, {
  "mapping": "Foot_Right",
  "rotation": [0.50041497, 0.71361345, -0.19108525, 0.45147216],
  "scale": [0.99999994, 0.99999988, 1.0000001],
  "translation": [-5.9370795e-08, 0.30331355, -9.3613926e-09]
}, {
  "children": [10],
  "mapping": "Spine",
  "rotation": [-0.99988139, -1.6378647e-07, -5.1943753e-06, 0.015408469],
  "scale": [1, 0.99999994, 1.0001196],
  "translation": [-2.5399265e-07, -0.11947887, 0.025937753]
}, {
  "children": [11],
  "mapping": "Chest",
  "rotation": [0.095340282, 1.8421666e-09, -1.4271555e-08, 0.99544483],
  "scale": [1, 1, 0.99999994],
  "translation": [-3.126388e-15, 0.15518206, 1.192092e-09]
}, {
  "children": [12, 17, 35],
  "mapping": "UpperChest",
```

```
  "rotation": [-0.046035834, -3.0529954e-09, -1.2143388e-08, 0.99893981],
  "scale": [1, 1, 0.99999994],
  "translation": [-1.9547208e-15, 0.096603058, 1.1041333e-09]
}, {
  "children": [13],
  "mapping": "Neck",
  "rotation": [-0.17108226, 1.4507523e-07, 1.7659243e-08, 0.98525673],
  "scale": [1, 0.99999994, 1],
  "translation": [2.9012837e-09, 0.11037513, -0.015938893]
}, {
  "children": [14, 15, 16],
  "mapping": "Head",
  "rotation": [-0.81848532, -0.0005050216, 0.0058752261, 0.5744974],
  "scale": [1.0000001, 0.99999994, 1.0000001],
  "translation": [1.8501332e-10, 0.14005938, -2.144948e-09]
}, {
  "mapping": "Eye_Right",
  "rotation": [0.6114586, -0.61145973, 0.3509362, 0.35927594],
  "scale": [1.0000001, 1.0000001, 0.99999994],
  "translation": [0.026118824, 0.096537694, 0.025297057]
}, {
  "mapping": "Jaw",
  "rotation": [0.6114586, -0.61145973, 0.35093614, 0.35927591],
  "scale": [0.99999988, 1, 0.99999976],
  "translation": [0.000883931, 0.13348749, -0.050703958]
}, {
  "mapping": "Eye_Left",
  "rotation": [0.6114586, -0.61145973, 0.3509362, 0.35927594],
  "scale": [1.0000001, 1, 0.99999994],
  "translation": [-0.027002752, 0.096941978, 0.025406796]
}, {
  "children": [18],
  "mapping": "Shoulder_Left",
  "rotation": [-0.057361692, 0.064089738, 0.74236667, 0.66445005],
  "scale": [1.0000001, 1.0000002, 1.0000001],
  "translation": [-0.077003337, 0.052138112, 0.0079694372]
}, {
  "children": [19],
  "mapping": "UpperArm_Left",
  "rotation": [0.068985268, -0.077070758, -0.024934493, 0.99432361],
  "scale": [1.0000001, 1.0000001, 1.0000001],
  "translation": [6.3556382e-09, 0.090553902, 5.4190838e-09]
```

```
    }, {
      "children": [20],
      "mapping": "LowerArm_Left",
      "rotation": [-0.17967162, 0.18820393, -0.017888531, 0.96538979],
      "scale": [1, 0.99999988, 0.99999988],
      "translation": [7.8916727e-08, 0.2126607, -7.7419005e-09]
    }, {
      "mapping": "Hand_Left",
      "rotation": [-0.088752255, 0.078095689, 0.055917982, 0.99141186],
      "scale": [1, 0.99999994, 0.99999994],
      "translation": [-7.9528881e-08, 0.20524138, 2.3747615e-08]
    }, {
      "children": [22],
      "mapping": "Shoulder_Right",
      "rotation": [-0.057361815, -0.064089619, -0.74236667, 0.66445011],
      "scale": [1, 1, 1.0000001],
      "translation": [0.077003315, 0.05213809, 0.0079694269]
    }, {
      "children": [23],
      "mapping": "UpperArm_Right",
      "rotation": [0.068985291, 0.077070743, 0.024934437, 0.99432361],
      "scale": [1, 1.0000001, 0.99999994],
      "translation": [-5.4677834e-08, 0.09055385, 1.5243275e-08]
    }, {
      "children": [24],
      "mapping": "LowerArm_Right",
      "rotation": [-0.17906539, -0.18455547, 0.037689172, 0.96563679],
      "translation": [1.2760897e-08, 0.21266064, -3.9810587e-08]
    }, {
      "mapping": "Hand_Right",
      "rotation": [-0.094653666, -0.076583833, -0.075047389, 0.98971891],
      "scale": [0.99999976, 0.99999994, 0.99999994],
      "translation": [-3.5426122e-08, 0.20500483, 7.482987e-10]
    }
  ],
  "skeletons": [
    {
    "root": 1,
    "joints": [1, 2, 3, 4, 5, 6, 7, 8, 9, 10, 11, 12, 13, 14, 15, 16, 17, 18, 19, 20, 21, 22, 23, 24, 25]
    }
  ],
```

```
"lods": [
  {
    "name": "main",
    "lod": 0,
    "mesh": 0,
    "skeletons": [0]
  }
]
}
```

Table 16.

The parser first decodes the "asset" root property and ensures that it handles the version of the file. Since the "version" property indicates a "1.0" version, the parsing may continue.

The parser analyzes the item in the "lods" root list. The name of this item in the "lods" root list is "main", which is found in the "name" property. The level of detail is 0, which is found in the "lod" property.

The lod has a mesh since there is a "mesh" property. This property has value "0", thus referencing the first node of the "nodes" list. The parser decodes this node and finds a "mapping" property with a value of "full_body". An application may be written to process this node as a full body avatar. The parser may also find a "geometry" property in the first node, which refers to the first item in the "geometries" root list.

The parser decodes the first geometry of the "geometries" root list. The parser may find several properties that reference data in the "data" root list. In each case, the parser may decode the item found in the "data" root list and associate the result to the referenced property. For example, the "vertices" property of the geometry refers to the first item of the "data" root list. The parser gathers the related binary data. In this case, the related binary data is read from the "0_positions.bin" file. Then, a 32-bit float tensor with dimension [53698, 3] is built using the binary data, given the "type", "dims", and "dtype" properties of the data item. Finally, this tensor is used to define the vertices of the geometry of the avatar. The vertices ("vertices" property), normals ("normals" property), uvs ("uvs" list), and their corresponding face indices (found in the "faces" property) are decoded and added to the geometry of the avatar.

The parser finds two blendshapes in the "blendshapes" list of the geometry. Their names are "AU1_Inner_Brow_Raiser_L" and "AU1_Inner_Brow_Raiser_R" (decoded from the "name" property). Both are based on the Action Unit 1 from the FACS specification (decoded from the "mapping" property). The first blendshape updates the left side of the avatar, and the second blendshape updates the right side (decoded from the "side" property). The parser builds a sparse tensor for each blendshape using the "displacements" property. This sparse representation may be kept as is, or, for instance, may be merged into a single dense tensor with dimension [2, 53698, 3].

The parser decodes a texture from the first item of the "textures" list of the geometry. The texture type is "albedo" (found in the "type" property). The texture uses the first uvs definition (UV coordinates + face indices) of the geometry, since the "uvs" property of the texture is 0. The texture image is built from data item for index 6 (which is found in the "image" property). The parser loads and converts the image file "0_albedo.png" to a 32-bit float RGB image, given the "dtype" and "ctype" properties of the data item. Finally, the parser decodes the "basis" list and gets two 32-bit float dense tensor of dimension [512, 512, 3] with texture displacements.

The parser has decoded of the content of the geometry item and gathered all the corresponding data in an internal structure, like scene objects found in game engines. Since the first node references a geometry and has no children, then the resulting avatar mesh is only made of a single geometry.

Back to the lod item, the "skeletons" list is parsed: there is a single reference to the first skeleton of the "skeletons" root list. This skeleton has 25 joints referenced by the "joints" property of the skeleton. The root of the skeleton is node of index 1 ("root" property). Each node referenced by these properties corresponds to a joint and contains a "mapping" property that defines the location of the joint in the body. In most cases, there is a "children" list that defines the children of the node. The "children" list is used to build a hierarchy of joints. Most of them also contain "rotation", "scale" and "translation" properties: there are used to build the 3D location of each joint. This may be done recursively, starting with the root joint and knowing that its location (0, 0, 0).

**Processing model**

The below sections describe the components of the encoder and decoder architecture for the avatar embodiment and proprieties defined previously.

34

### Encoder

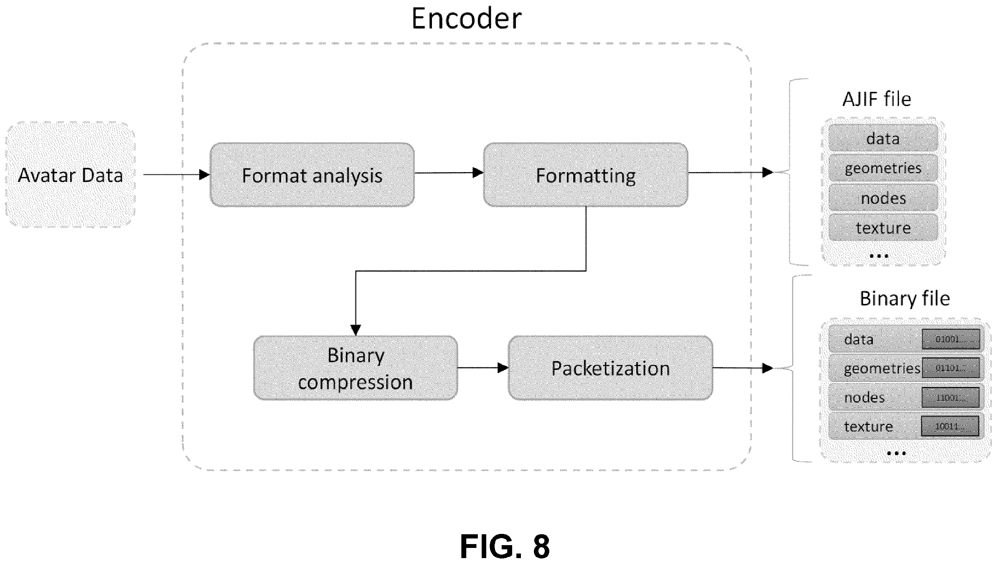

FIG. 8 is a process diagram illustrating an example encoder architecture according to some embodiments. FIG. 8 illustrates the encoder architecture, in which the encoder processes avatar data in the format described above. The output data from the encoder is ".ajif" format data for some embodiments and/or a binary compressed version of that same format for some embodiments. In binary format, the data may be packetized to allow independent access to each of the elements of the avatar embodiment.

Format analysis and formatting blocks depicted in FIG. 8 are parsing mechanisms to extract the relevant information in the different file formats so it may be packed and compressed equally by the binary compression module or to a human-readable format.

The Formatting module allows the generation of a human-readable format (AJIF) instead of binary, in the form of a JSON file format.

The binary compression module applies lossless compression using the normative SPIHT algorithm and Arithmetic Coding (AC) and transforms the data into a bitstream.

The binary compression for ".json" files follow the RFC 8949 Concise Binary Object Representation standard.

The packetization steps consists in organizing the binary compressed data into dedicated packets for each of the elements of the avatar embodiment (such as data and geometries). This may be used during transport to request the access of part of the data only.

### Decoder

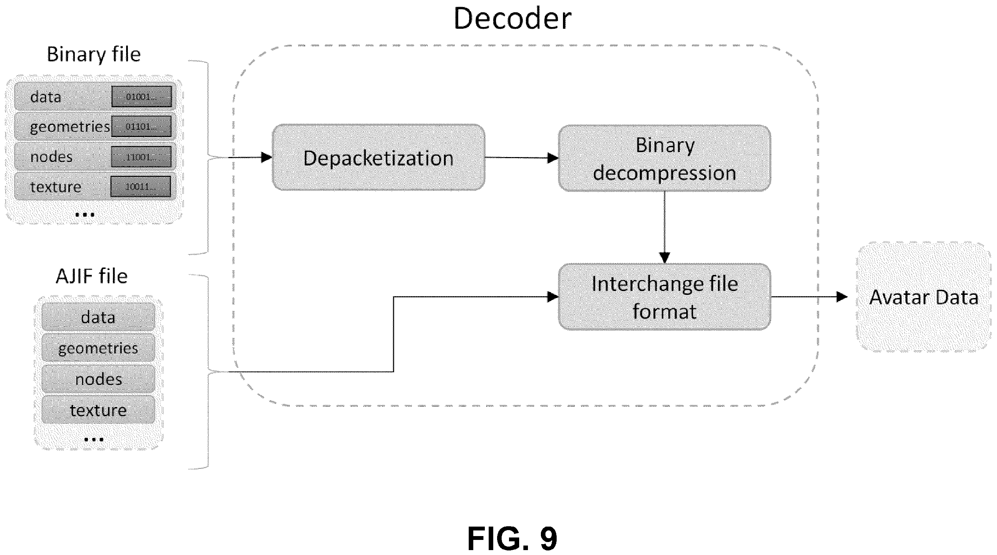

FIG. 9 is a process diagram illustrating an example decoder architecture according to some embodiments. FIG. 9 illustrates the decoder architecture, in which the input is binary data and/or a AJIF file format.

The input binary format data goes through depacketization and decompression following the same norms used and presented in the encoder. The data is then extracted from the file and mapped to the "Avatar Data" format. After this step, the application has the information related to avatar embodiments. Data in a human-readable format (AJIF) and "Avatar Data" format also may be extracted.

### Streaming

The avatar data are a set of formal information supported by any computer, like a string, an image, or a tensor. The avatar data respect some specifications. For instance, all integers might be coded on 64-bit signed integers. As a result, if the original data is not exactly in this format, like 32-bit unsigned integers, some processing is required to build the avatar data. The addition of Neural Network (NN) data shall follow the same rules as for the avatar data. In Fig. 4, the two types of information are separated for illustration purposes, in practice the NN data (NeRF Data) may be part of the Avatar Data. In the following, for sake of clarity, each time Avatar Data are used, they also comprise the NeRF Data.

Depending on options, the encoding can keep all the avatar data without loss, or lose part of the avatar data, or some floating precision, these options are described throughout the document.

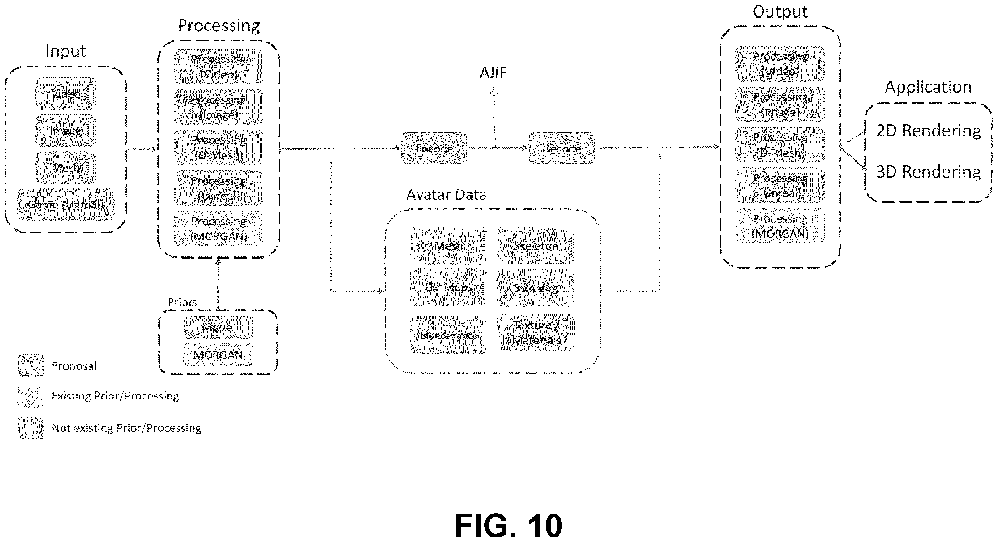

FIG. 10 is a process diagram illustrating an example process for streaming an AJIF file according to some embodiments. FIG. 10 illustrates an example mechanism for a streaming pipeline using the AJIF file format to transmit avatar data. The AJIF file format is compatible with streaming by arranging components of the avatar in packages, allowing application to request a particular propriety of the avatar, for example, a level of detail of the avatar, or just the skeletal information, or animation controllers.

FIG. 10 depicts that flexibility. The framework starts by receiving one of the inputs in the input list (video, image, mesh, or proprietary avatar formats). The data from the input is processed and mapped to the AJIF format. "Avatar Data" in AJIF-complaint format may be compressed for transmission, e.g., encoded. The encoded data (AJIF data) may be received and decoded at the receiver side. The AJIF format is a JSON-based format and for binary compression, AJIF-formatted data may follow the JSON compression standard, RFC 8949: Concise Binary Object Representation. The output processing block maps the content provided by the AJIF stream to application dependent requirements e.g., requirements for: rendering, an interactive application, a video-based streaming application, and others.

### Video Conferencing Tool

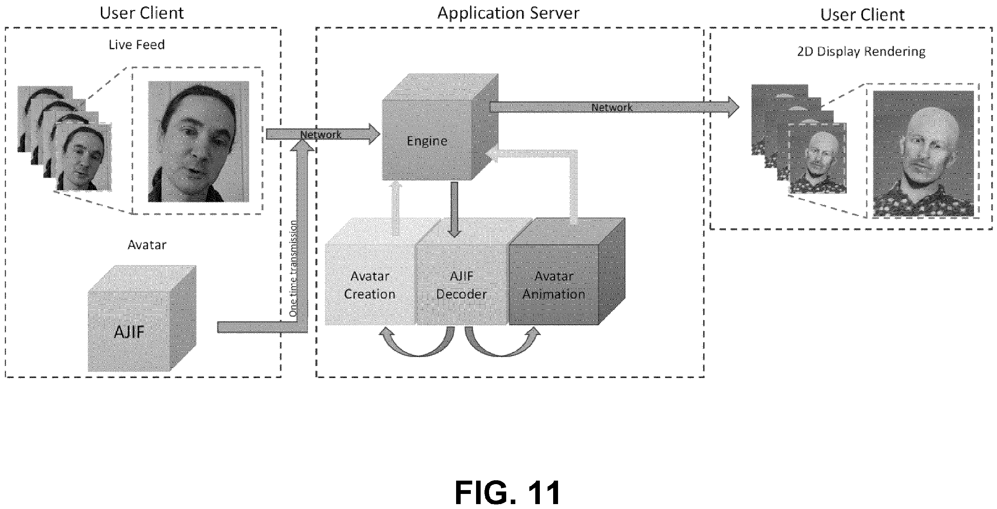

FIG. 11 is a process diagram illustrating an example video conferencing architecture with AJIF format data according to some embodiments. There are two people that initiate a video call using as output traditional flat screen 2D devices and one or multiple cameras as input devices. The AJIF format provides the ability to transfer an avatar instance between users. FIG. 11 illustrates a use case for video conferencing using the AJIF format to generate the virtual representation of the users. The users have access to a web camera and may transmit a live video feed of themselves. In this use case, both users send an AJIF file that represents their choice of avatar identity. The server has the objective of decoding and creating the appropriated functionalities for avatar manipulation and rendering.

In this example, the AJIF encoding includes "Geometries" data, which may contain the vertices, faces, normal, uvs, blendshapes and textures of the avatar model representation. The "Geometries" data are transferred at the beginning of the stream by each of the users and the server engine creates the 3D geometrical information required for rending and animating the avatar representation on each end of the communication. The following stream contains the video feed of each user which the engine will extrapolate the changes in pose and expression of their face and animate the avatar. The engine updates the avatar and scene and provides the renderings to both clients if the rendering is at the server side. If the rendering is on the client side, the engine provides the avatar parameters (typically blendshapes weights) to animate the avatar.

**Workflow Schema**

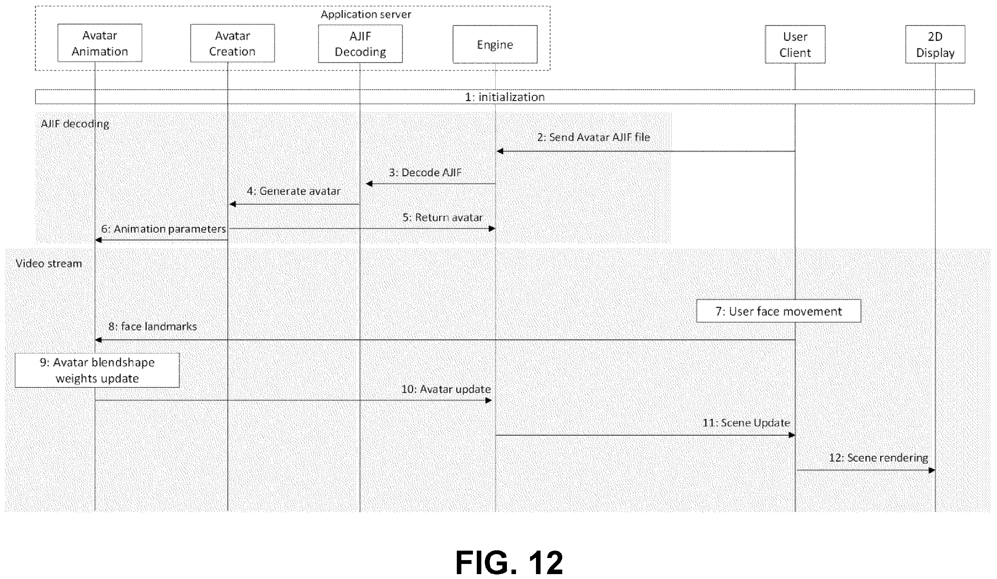

FIG. 12 is a message sequence chart illustrating an example process for a video conferencing use case according to some embodiments. FIG. 12 shows some of the details for workflow and coordination between a user and an application. In item 1, initialization protocols including application initialization, user authentication, services discovery, rendering device detection are performed. In item 2, the user sends the avatar AJIF file to initialize the avatar. In item 3, the engine requests the AJIF decoder to interpret the file. In item 4, the decoded AJIF file is sent to an avatar creation block to create the avatar in the application format. In item 5, the avatar application dependent structure and manipulators are returned to the engine for real-time manipulation. In item 6, the avatar animation parameters are sent to the avatar animation block for real-time animation. In item 7, the user moved his or her face by rotation or change in facial expression. In item 8, the landmarks for face pose and expression are sent to the animation block. In item 9, the animation module translates the landmarks to blendshape weights coefficients. In item 10, the animation blocks notify the engine to update the avatar and scene. In item 11, the engine notifies the client of the scene changes. In item 12, the 2D display is updated with the new changes related to the avatar and scene.

**Immersive Experiences**

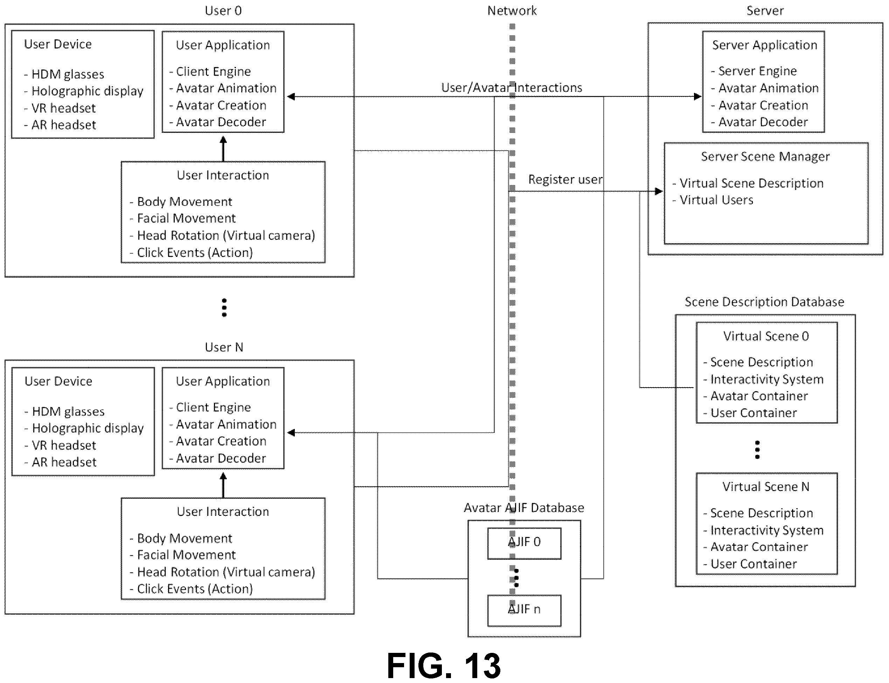

FIG. 13 is a system diagram illustrating an example set of interfaces for immersive experiences with one or more users/avatars according to some embodiments. There are one or several people that initiate an application in an immersive environment using augmented reality (AR) or virtual reality (VR). Instead of a video call, an immersive environment application may use a 3D rendering mechanism to represent people, such as HMD glasses, holographic displays, and/or immersive headsets. FIG. 13 illustrates the architecture for the use case in immersive experiences. The experiences are defined as virtual scenes and stored in a dedicated database, which may be offline or online.

A virtual scene contains a complete description of the scene composition e.g., virtual objects, interactivity systems, avatar manipulators, user container, virtual camera, lighting, among other items. The server has the objective to manage the interaction between users and the scene. Therefore, the server may, if needed, take charge of the rendering, animation, and/or scene interactions, or, for some embodiments, this effort may be split between the server and the user applications. For some embodiments, this effort is done by the user application if computing resources permit.

Each user has an application that may render, animate and/or perform scene interaction. The user application has the ability to perform user/avatar interaction or animation directly, where the server would have to request additional input from the device to perform user/avatar interaction or animation. Hence, the user application may handle the data related to animating the avatar. The user application stores in the cloud or in the device, the avatar identity to be loaded in the virtual world. The AJIF file allows such flexibility, and the network may request that the AJIF file be stored in the avatar storage. For some embodiments, the AJIF file may be stored directly in device memory. This data is transmitted to the server to perform scene updates related to avatar interactions.

**Virtual world**

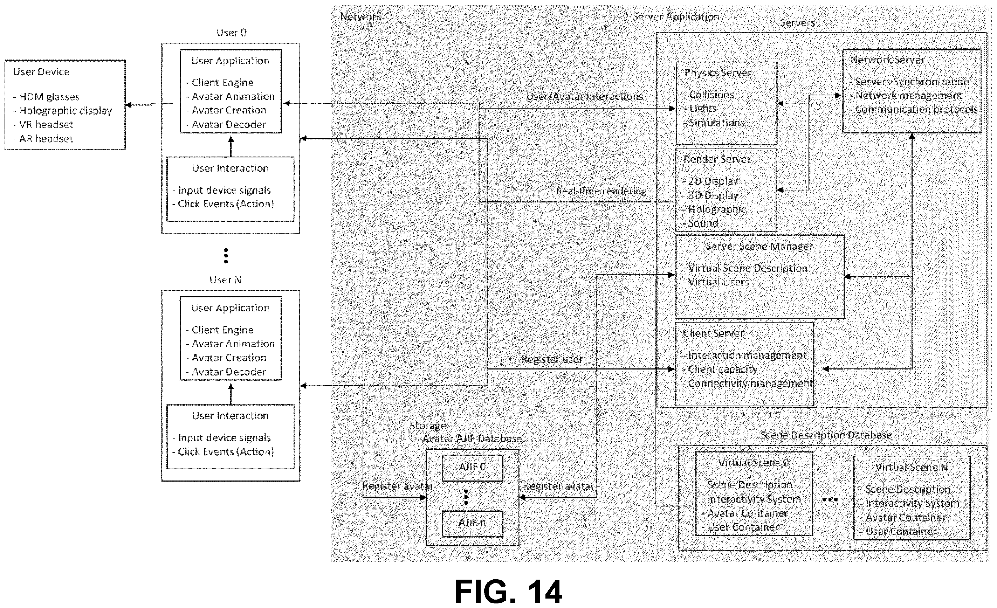

FIG. 14 is a system diagram illustrating an example set of interfaces for virtual worlds with multiple online users/avatars according to some embodiments.

There are multiple people connected to a virtual world through the means of either video or immersive displays (2D video, HDMR glasses or immersive headsets). FIG. 14 illustrates the architecture for the use case in virtual worlds.

The virtual world is defined as virtual scene and stored in a dedicated database. The avatar representation is stored in in a database as AJIF files and may be queried by the user or the server application.

This system involves multiple servers, where each server has a designated functionality to improve computation power and distribution of data across large and dense networks. The servers may include a physics server, a render server, and a scene manager server.

The physics server is responsible for handling 3D object collision, light simulation, shadow casting, and other environmental physics simulation in the world. The physics server handles user input data to predict and correct physical interaction in the scene.

The render server renders the scene into the target device, tacking into account the physics simulation parameters e.g., lights, shadows, object position and materials. The render server renders spatial sound dependent on the physics simulation proprieties.

The scene manager server may manage the parameters of the scene, such as dynamic and static parameters. Dynamic parameters may be used with interactive events that need to be launched within a time stamp or as a cause of some object interactivity. Static parameters may include, for example, objects in the scene that relate to initialization stages, or non-interactive objects.

The scene manager server may manage information related to the users and their respective avatar and how they are integrated in the scene. The scene manager server also may manage any assets the user/avatar may interact with and the space of interaction within the virtual world. The scene manager server may request individual avatar components or complete avatar descriptions from the AJIF database, depending on the state of the scene and application requirements.

A scene manager server may include a client server and a network server.

The client server may manage user interaction between users and objects and notify the network when updates need to be made. The client server may handle payload capacity in the network for client/user information streaming to have a high-rate bitstream and high performance at the user application side. The client server may initialize the communication between the user and the server application. The client server may request individual avatar components or complete avatar descriptions from the AJIF database, depending on user/client requirements that may differ from the server.

The network server may manage the data synchronization between all the servers and the data distribution in the network. It synchronizes users at the same timestamp of all the events. The network server may establish the protocols for online communication between users and servers. The network server may monitor for stable connections and communications between all the parties.

For some embodiments, the users are clients that contain their own hardware and applications to facilitate the job of the servers, such as rendering, physics simulation, avatar creation and animation, and scene interactivity, in situation where the world requires local computational power to overcome network transmissions difficulties. In this scenario, the server application needs to predict the behaviors of the users, in the case of multiuser online video gaming.

**Asset creation workflow**

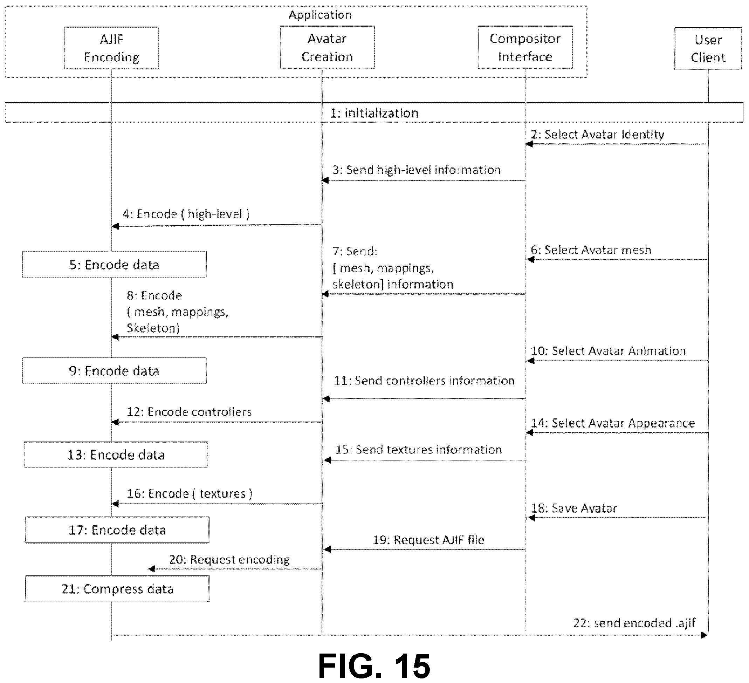

FIG. 15 is a message sequence chart illustrating an example process for asset creation workflow between a client and a server application according to some embodiments. FIG. 15 illustrates the use case of an asset creation pipeline with a workflow diagram. The user client may be an artist or a normal user who interacts with an interface ("Compositor Interface") to create an avatar model. This model allows the generation of personalized avatar representation and demonstrates the usability of the AJIF file. The avatar creation block has the objective of validating and guaranteeing that the data respects the format discussed above and that the encoder is capable of interpreting the avatar data to produce an AJIF file.

In item 1, initialization protocols including application initialization, user authentication, services discovery, interface for avatar proprieties visualization (compositor interface) are performed. In item 2, the user inserts the information related to the avatar identity, such as, name, identifier, age and gender. In item 3, a request is sent to validate the high-level information data. In item 4, a request to encode the data is sent. In item 5, the high-level information data is encoded and structured as discussed earlier.

In item 6, the user selects the avatar mesh from a list of proposed avatars proposed by the compositor or manually creates his own avatar by providing the following information: geometry data, such as vertices, faces, normals, blendshapes; skeleton data, such as root joint, joints, skinning weights; and mappings data. In item 7, a request is sent to validate the avatar mesh, mappings, and skeleton information data. In item 8, a request to encode the data is sent. In item 9, the avatar mesh, mappings, and skeleton information data is encoded and structured as discussed earlier.

In item 10, the user selects the avatar animation from a list of animations proposed by the compositor or manually creates animation through the compositor by editing the controllers that animate geometries, skeletons, blendshapes, textures, or controller weights. In item 11, a request is sent to validate the avatar animation/controller information data. In item 12, a request to encode the data is sent. In item 13, the avatar animation/controller information data is encoded and structured as discussed earlier.

In item 14, the user selects the avatar appearance from a list of appearances proposed by the compositor or manually creates his or her own appearance by providing one or more of the following information: texture type, such as, albedo, normal, specular; UVS; faces; texture image; and texture displacements. In item 15, a request is sent to validate the avatar appearance/texture information data. In item 16, a request to encode the data is sent. In item 17, the avatar appearance/texture information data is encoded and structured as discussed earlier.

In item 18, the user requests to save his choices as an AJIF file for future use in other applications. In item 19, a request is sent to encode the avatar data. In item 20,a request to encode and compress all the avatar data is sent. In item 21, the avatar information selected by the user is compressed. In item 22, the encoded and compressed (or not, depending on user's choice) data is sent as an .ajif file to the user for loading in virtual environments.

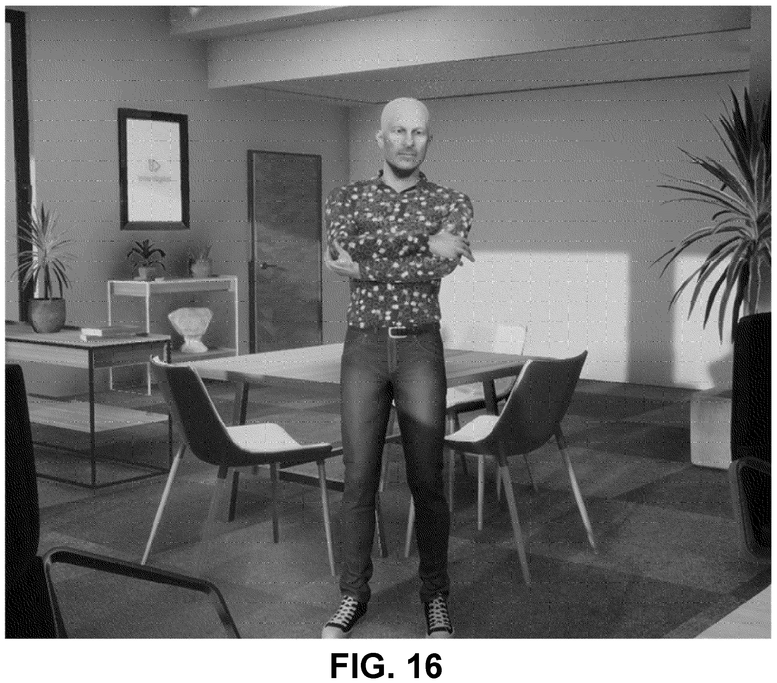

FIG. 16 is an illustration showing an example outcome of an asset creation process related to an avatar representation according to some embodiments. FIG. 16 illustrates the outcome of the asset creation process related to the avatar representation. The user integrated the AJIF file into a virtual interactive world with realistic rendering. FIG. 16 shows an example output of an avatar asset creation and integration into a virtual world.

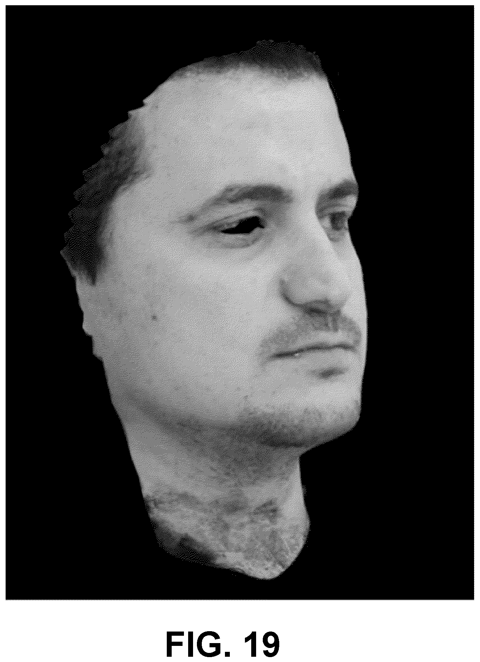

Fig. 19 illustrates a face mesh whose vertices are generated by a model in the list of "models". The Table 17 is a syntax example of an .ajif file comprising description of the NeRF data associated with the avatar using this model.

```
{
  "asset": {
   "version": "1.0",
   "copyright": "Interdigital R&D"
  },
"capture" :[
   {
     "description": "Capture campain",
     "label": "22_111_20190625_0930\AU0",
     "cameras": [

      {
        "dimension": [5184.0, 3456.0],
        "focal": [8469.095055951755, 8469.095055951755],
        "center": [2592.0, 1728.0],
        "skew" : 1.0,
        "distortion": [-0.2250295957873536, 7.307311945828236, -90.14973320582132],
        "image": 6,
        "angle": [1.7717308827114047, 1.369015077714347],
        "transform": [
          [
            0.8103680520277506,
            -0.3883058293573623,
            0.43877352146618853,
            0.08844332870722424
          ],
          [
            0.584738767577614,
            0.4884179752926294,
            -0.6477101628837251,
            -0.15377727417035736
          ],
          [
            0.03720475701522408,
            0.7814515111624902,
            0.6228557953148536,
            0.9961397547554547
          ],
          [
            0.0,
```

```
                0.0,
                0.0,
                1.0
            ]
        ]
    },
    {
    "dimension": [5184.0, 3456.0],
    "focal": [12506.056735592843, 12506.056735592842],
    "center": [2592.0, 1728.0],
    "skew" : 1.0,
    "distortion": [0.1245037461168968, -15.070193473109137, 251.71394432710562],
    "image": 7,
    "angle": [1.3843962831523775, 1.0098156168874008],
    "transform": [
        [
            -0.4380166154324284,
            0.06654763045150602,
            0.8965003388099806,
            0.6735634116840955
        ],
        [
            -0.025925658323890877,
            -0.997776568943064,
            0.061398523668570806,
            0.7476780861860429
        ],
        [
            0.8985929583774805,
            0.003651212058615294,
            0.4387680068155722,
            0.8034581553143898
        ],
        [
            0.0,
            0.0,
            0.0,
            1.0
        ]
    ]
    },
    {
    "dimension": [5184.0, 3456.0],
    "focal": [12516.55065349908, 12516.55065349908],
    "center": [2592.0, 1728.0],
    "skew" : 1.0,
    "distortion": [0.09585776192248872, -9.424024054331232, 114.12631591087502],
    "image": 8,
    "angle": [1.3835721214222427, 1.0091055732032022],
```

```
            "transform": [
                [
                    0.13785779210487661,
                    0.17306660935510793,
                    0.9752144266171902,
                    0.7729277760905633
                ],
                [
                    0.027842310274302645,
                    0.9835492517808312,
                    -0.17848158190680696,
                    0.47255798038459174
                ],
                [
                    -0.990060621838157,
                    0.051757299462910106,
                    0.13077135404112222,
                    0.4247336649549649
                ],
                [
                    0.0,
                    0.0,
                    0.0,
                    1.0
                ]
            ]
        }
    ]
}
],
"models" :[
  {
    "name": "NeRF",
    "version": 1.0,
    "description": "NeRF models for avatar generation",
    "purpose": "urn:mpeg:avatar:model:headgenerator",
    "format": "binary",
    "type": "networks",
    "uri": "nerf_model.bin"
  }
],
"data": [
  {
    "name": "0_positions",
    "type": "dense",
    "dims": [53698, 3],
    "dtype": "f32",
    "uri": "0_positions.bin"
  },
```

```
    {
      "name": "0_normals",
      "type": "dense",
      "dims": [53698, 3],
      "dtype": "f32",
      "uri": "0_normals.bin"
    },
    {
      "name": "0_uvs",
      "type": "dense",
      "dims": [53698, 2],
      "dtype": "f32",
      "uri": "0_uvs0.bin"
    },
    {
      "name": "0_faces",
      "type": "dense",
      "dims": [53496, 4],
      "dtype": "i32",
      "uri": "0_faces.bin"
    },
    {
      "name": "cameraView",
      "type": "dense",
      "uri": "transforms.bin",
      "dims": [16],
      "dtype": "f32",
      "offset": 0,
      "byteLength": 64
    }
  ],
  "geometries": [
    {
      "vertices": 12,
      "normals": 1,
      "uvs": [2],
      "faces": {
        "vertices": 3,
        "normals": 3,
        "uvs": [3]
      },
      "textures": [
        {
          "type": "albedo",
          "uvs": 0,
          "image": 6
        }
      ]
    }
```

```
],
"lods":[
  {
    "name": "main",
    "lod": 1,
    "mesh": 0
  },
  {
    "name": "nerf",
    "lod": 0,
    "capture": 0,
    "nerf": [
      {
        "model": 0,
        "rays" [
          {
            "samples": 1000,
            "origin":              [0.005818810212301873,              0.004097495880482915,
0.00017439069950064834],
            "rayDirection" [-0.6586, -0.5120, -0.5515],
            "viewDirection"                    [0.002568978252038699,0.9999922564756948,-
0.002981164099498848],
            "min": 0.0,
            "max": 1.0,
            "whiteBackground": true,
            "importance": 1
          },
          ...
          {
            "samples": 1000,
            "origin": [0.0073, -0.5047, 3.6395],
            "rayDirection" [-0.7206, -0.3884, -0.5743],
            "viewDirection"                    [0.002568978252038699,0.9999922564756948,-
0.002981164099498848],
            "min": 0.0,
            "max": 1.0,
            "whiteBackground": true,
            "importance": 1
          }
        ]
      }
    ]
  }
]
}
```

Table 17.

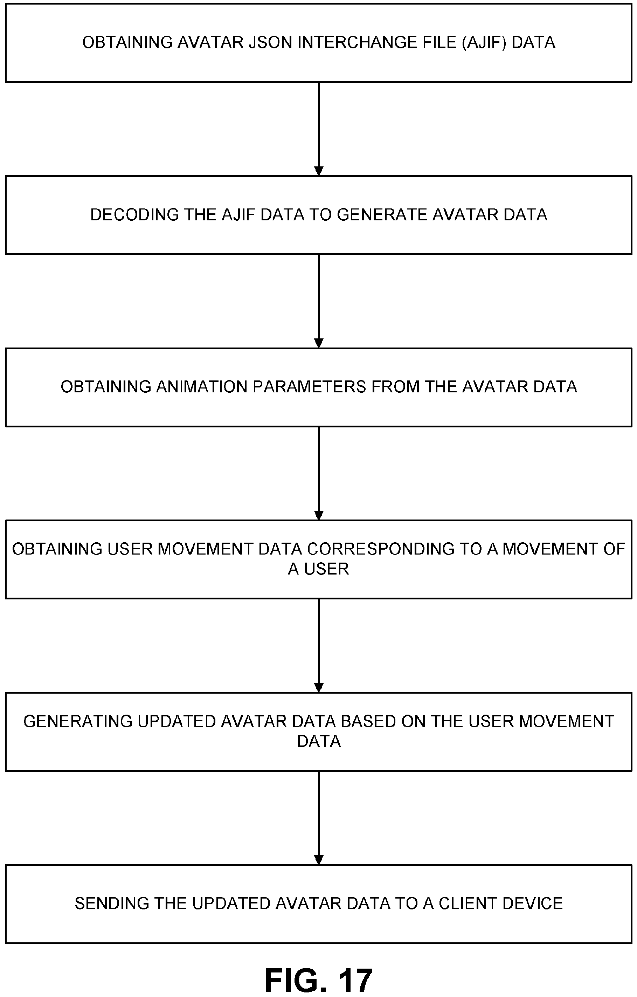

FIG. 17 is a flowchart illustrating an example process for decoding Avatar JSON Interchange File (AJIF) data according to some embodiments. For some embodiments, an example process may include obtaining Avatar JSON Interchange File (AJIF) data. For some embodiments, the example process may further include decoding the AJIF data to generate avatar data. For some embodiments, the example process may further include obtaining animation parameters from the avatar data. For some embodiments, the example process may further include obtaining user movement data corresponding to a movement of a user. For some embodiments, the example process may further include generating updated avatar data based on the user movement data. For some embodiments, the example process may further include sending the updated avatar data to a client device.

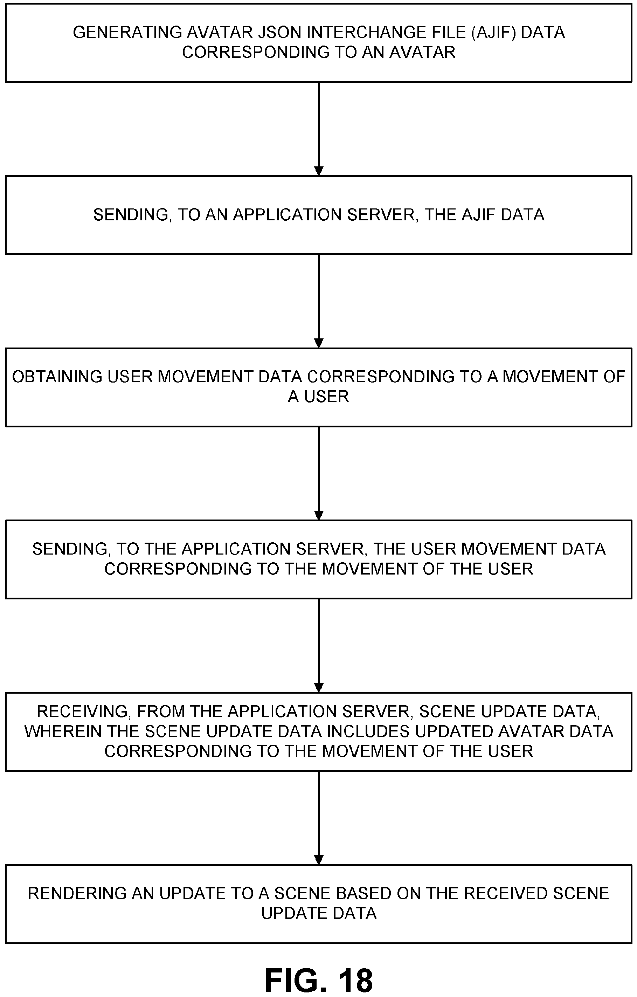

FIG. 18 is a flowchart illustrating an example process for encoding Avatar JSON Interchange File (AJIF) data according to some embodiments. For some embodiments, an example process may include generating Avatar JSON Interchange File (AJIF) data corresponding to an avatar. For some embodiments, the example process may further include sending, to an application server, the AJIF data. For some embodiments, the example process may further include obtaining user movement data corresponding to a movement of a user. For some embodiments, the example process may further include sending, to the application server, the user movement data corresponding to the movement of the user. For some embodiments, the example process may further include receiving, from the application server, scene update data, wherein the scene update data comprises updated avatar data corresponding to the movement of the user. For some embodiments, the example process may further include rendering an update to a scene based on the received scene update data.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

A first example method in accordance with some embodiments may include: obtaining Avatar JSON Interchange File (AJIF) data; decoding the AJIF data to generate avatar data; obtaining animation parameters from the avatar data; obtaining user movement data corresponding to a movement of a user; generating updated avatar data based on the user movement data; and sending the updated avatar data to a client device.

Some embodiments of the first example method may further include generating avatar animation rendering data using the animation parameters;

For some embodiments of the first example method, the user movement data is face landmark data.

For some embodiments of the first example method, generating the updated avatar data may include: obtaining blendshape weight updates corresponding to the face landmark data; and applying the blendshape weight updates to the avatar data to generate the updated avatar data.

For some embodiments of the first example method, generating the updated avatar data may include: obtaining, from the avatar data, vertex position data associated with an avatar; obtaining, from the avatar data, linear blend skinning weights; obtaining, from the avatar data, a transformation matrix; and generating the updated avatar data using the vertex position data, the linear blend skinning weights, and the transformation matrix.

For some embodiments of the first example method, the animation parameters may include a channel object corresponding to a portion of an avatar.

Some embodiments of the first example method may further include analyzing the avatar data to determine what type of avatar is represented in the avatar data.

Some embodiments of the first example method may further include analyzing the avatar data to determine an avatar parts mapping of the avatar data.

Some embodiments of the first example method may further include analyzing the avatar data to determine at least one node in the avatar data associated with an avatar.

For some embodiments of the first example method, the AJIF data may include data for at least one of the following data types related to the avatar: raw avatar data, geometry data, texture data, skeleton data, controller data, and level of detail (LOD) data.

For some embodiments of the first example method, the AJIF data may include data for at least one of the following data types: file node data, metadata, and file asset data.

For some embodiments of the first example method, the AJIF data corresponds to two or more files.

For some embodiments of the first example method, the AJIF data may include image data associated with the avatar.

A first example apparatus in accordance with some embodiments may include: a processor; and a non-transitory computer-readable medium storing instructions operative, when executed by the processor, to cause the apparatus to perform any one of the methods listed above.

A second example method in accordance with some embodiments may include: generating Avatar JSON Interchange File (AJIF) data corresponding to an avatar; sending, to an application server, the AJIF data; obtaining user movement data corresponding to a movement of a user; sending, to the application server, the user movement data corresponding to the movement of the user; receiving, from the application server, scene update data, wherein the scene update data comprises updated avatar data corresponding to the movement of the user; and rendering an update to a scene based on the received scene update data.

For some embodiments of the second example method, the user movement data is face landmark data.

A second example apparatus in accordance with some embodiments may include: a processor; and a non-transitory computer-readable medium storing instructions operative, when executed by the processor, to cause the apparatus to perform any one of the methods listed above.

A third example method in accordance with some embodiments may include: obtaining Avatar JSON Interchange File (AJIF) data; decoding the AJIF data to generate avatar data; obtaining animation parameters from the avatar data; obtaining user movement data corresponding to a movement of a user; generating updated avatar data based on the user movement data; and rendering the updated avatar data to a display device.

Some embodiments of the third example method may further include generating avatar animation rendering data using the animation parameters.

For some embodiments of the third example method, the user movement data is face landmark data.

For some embodiments of the third example method, generating the updated avatar data may include: obtaining blendshape weight updates corresponding to the face landmark data; and applying the blendshape weight updates to the avatar data to generate the updated avatar data.

For some embodiments of the third example method, generating the updated avatar data may include: obtaining, from the avatar data, vertex position data associated with an avatar; obtaining, from the avatar data, linear blend skinning weights; obtaining, from the avatar data, a transformation matrix; and generating the updated avatar data using the vertex position data, the linear blend skinning weights, and the transformation matrix.

For some embodiments of the third example method, the animation parameters may include a channel object corresponding to a portion of an avatar.

Some embodiments of the third example method may further include analyzing the avatar data to determine what type of avatar is represented in the avatar data.

Some embodiments of the third example method may further include analyzing the avatar data to determine an avatar parts mapping of the avatar data.

Some embodiments of the third example method may further include analyzing the avatar data to determine at least one node in the avatar data associated with an avatar.

For some embodiments of the third example method, the AJIF data comprises data for at least one of the following data types related to the avatar: raw avatar data, geometry data, texture data, skeleton data, controller data, and level of detail (LOD) data.

For some embodiments of the third example method, the AJIF data may include data for at least one of the following data types: file node data, metadata, and file asset data.

For some embodiments of the third example method, the AJIF data corresponds to two or more files.

For some embodiments of the third example method, the AJIF data may include image data associated with the avatar.

A third example apparatus in accordance with some embodiments may include: a processor; and a non-transitory computer-readable medium storing instructions operative, when executed by the processor, to cause the apparatus to perform the method of any one of claims 18 through 30.

A fourth example method in accordance with some embodiments may include: obtaining Avatar JSON Interchange File (AJIF) data; decoding the AJIF data to generate avatar data; obtaining animation parameters from the avatar data; receiving face landmark data corresponding to a face movement of a user; generating updated avatar data based on the face landmark data; and sending the updated avatar data to a client device.

A fourth example apparatus in accordance with some embodiments may include: a processor; and a non-transitory computer-readable medium storing instructions operative, when executed by the processor, to cause the apparatus to any one of the methods listed above.

A fifth example method in accordance with some embodiments may include: obtaining identity data regarding an avatar; generating high-level information data using the identity data; encoding the high-level information data; obtaining skeleton data regarding an avatar; generating mesh, mappings, and skeleton information data using the skeleton data; encoding the mesh, mappings, and skeleton information data; obtaining animation data regarding an avatar; generating controllers information data using the animation data; encoding the controllers information data; obtaining appearance data regarding an avatar; generating textures information data using the appearance data; encoding the textures information data; receiving a request to save avatar data; compressing the encoded high-level information data, the encoded mesh, mappings, and skeleton information data, the encoded controllers information data, and the encoded textures information data to generate compressed avatar data; and sending the compressed avatar data.

A fifth example apparatus in accordance with some embodiments may include: a processor; and a non-transitory computer-readable medium storing instructions operative, when executed by the processor, to cause the apparatus to perform any one of the methods listed above.

A sixth example apparatus in accordance with some embodiments may include at least one processor configured to perform any one of the methods listed above.

A seventh example apparatus in accordance with some embodiments may include a computer-readable medium storing instructions for causing one or more processors to perform any one of the methods listed above.

An eighth example apparatus in accordance with some embodiments may include at least one processor and at least one non-transitory computer-readable medium storing instructions for causing the at least one processor to perform any one of the methods listed above.

A signal in accordance with some embodiments may include updated avatar data generated according to any one of the methods listed above.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

The aspects described and contemplated in this disclosure can be implemented in many different forms. While some embodiments are illustrated specifically, other embodiments are contemplated, and the discussion of particular embodiments does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

In the present disclosure, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

The terms HDR (high dynamic range) and SDR (standard dynamic range) often convey specific values of dynamic range to those of ordinary skill in the art. However, additional embodiments are also intended in which a reference to HDR is understood to mean "higher dynamic range" and a reference to SDR is understood to mean "lower dynamic range." Such additional embodiments are not constrained by any specific values of dynamic range that might often be associated with the terms "high dynamic range" and "standard dynamic range."

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

Various implementations involve decoding. "Decoding", as used in this disclosure, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this disclosure, for example, extracting a picture from a tiled (packed) picture, determining an upsampling filter to use and then upsampling a picture, and flipping a picture back to its intended orientation.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions.

Various implementations involve encoding. In an analogous way to the above discussion about "decoding", "encoding" as used in this disclosure can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this disclosure.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. A mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Also, as used herein, the word "signal" refers to, among other things, indicating something to a corresponding decoder. For example, in certain embodiments the encoder signals a particular one of a plurality of parameters for region-based filter parameter selection for de-artifact filtering. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination, across various claim categories and types. Further, embodiments can include one or more of the following features, devices, or aspects, alone or in any combination, across various claim categories and types:

- Adapting residues at an encoder according to any of the embodiments discussed.
- A bitstream or signal that includes one or more of the described syntax elements, or variations thereof.
- A bitstream or signal that includes syntax conveying information generated according to any of the embodiments described.
- Inserting in the signaling syntax elements that enable the decoder to adapt residues in a manner corresponding to that used by an encoder.
- Creating and/or transmitting and/or receiving and/or decoding a bitstream or signal that includes one or more of the described syntax elements, or variations thereof.
- Creating and/or transmitting and/or receiving and/or decoding according to any of the embodiments described.
- A method, process, apparatus, medium storing instructions, medium storing data, or signal according to any of the embodiments described.
- A TV, set-top box, cell phone, tablet, or other electronic device that performs adaptation of filter parameters according to any of the embodiments described.
- A TV, set-top box, cell phone, tablet, or other electronic device that performs adaptation of filter parameters according to any of the embodiments described, and that displays (e.g. using a monitor, screen, or other type of display) a resulting image.
- A TV, set-top box, cell phone, tablet, or other electronic device that selects (e.g. using a tuner) a channel to receive a signal including an encoded image, and performs adaptation of filter parameters according to any of the embodiments described.
- A TV, set-top box, cell phone, tablet, or other electronic device that receives (e.g. using an antenna) a signal over the air that includes an encoded image, and performs adaptation of filter parameters according to any of the embodiments described.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A method comprising:

   obtaining Avatar JSON Interchange File (AJIF) data;
   decoding the AJIF data to generate avatar data and associated neural radiance field properties;
   obtaining animation parameters from the avatar data;
   obtaining user movement data corresponding to a movement of a user;
   generating updated avatar data based on the user movement data by using the neural radiance field properties; and
   sending the updated avatar data to a client device.

2. The method of claim 1, further comprising:
   generating avatar animation rendering data using the animation parameters generated by a neural networked configured with the neural radiance field properties;

3. The method of any one of claims 1-2, wherein the user movement data is face landmark data.

4. The method of any one of claims 1-2, wherein generating the updated avatar data comprises:

   obtaining, from the avatar data, vertex position data associated with an avatar;
   obtaining, from the avatar data, linear blend skinning weights;
   obtaining, from the avatar data, a transformation matrix; and
   generating the updated avatar data using the neural networked configured with the neural radiance field properties.

5. The method of any one of claims 1-4, wherein the animation parameters comprise a channel object corresponding to a portion of an avatar.

6. The method of any one of claims 1-5, further comprising analyzing the avatar data to determine an avatar parts mapping of the avatar data and the neural radiance field properties.

7. The method of any one of claims 1-6, wherein the AJIF data comprises data for at least one of the following data types related to the avatar: raw avatar data, geometry data, texture data, skeleton data, controller data, and level of detail (LOD) data.

8. The method of any one of claims 1-7, wherein the AJIF data corresponds to two or more files.

9. An apparatus comprising:

   a processor; and
   a non-transitory computer-readable medium storing instructions operative, when executed by the processor, to cause the apparatus to perform the method of any one of claims 1 through 8.

10. A method comprising:

    generating Avatar JSON Interchange File (AJIF) data corresponding to an avatar associated with neural radiance field properties;
    sending the AJIF data to an application server;
    obtaining user movement data corresponding to a movement of a user by using a neural network configured with the neural radiance field properties;
    sending, to the application server, the user movement data corresponding to the movement of the user;

receiving, from the application server, scene update data,
wherein the scene update data comprises updated avatar data corresponding to the movement of the user; and
rendering an update to a scene based on the received scene update data.

11. The method of claim 10, wherein the user movement data is face landmark data.

12. An apparatus comprising:

a processor; and
a non-transitory computer-readable medium storing instructions operative, when executed by the processor, to cause the apparatus to perform the method of any one of claims 10 through 11.

13. A signal including updated avatar data associated with neural radiance field properties generated according to any one of claims 1-8.

14. A computer program product comprising instructions which, when the program is executed by a processor, cause the processor to carry out the steps of the method of according to any one of claims 1-8.

**FIG. 1A**

EP 4 712 493 A1

**FIG. 1B**

FIG. 1C

EP 4 712 493 A1

**FIG. 2A**

**FIG. 2B**

**FIG. 3A**

CONTROL
MODULE
332

LCD
334

PARTLY-
REFLECTIVE
SURFACE
336

330

## FIG. 3B

CAMERA
348

CONTROL
MODULE
342

344

LCD

346

340

## FIG. 3C

**FIG. 4**

EP 4 712 493 A1

| JSON | 0 | Extra data size | Extra data | Not used |

**FIG. 5**

EP 4 712 493 A1

FIG. 6

**FIG. 7**

FIG. 8

**FIG. 9**

**FIG. 10**

**FIG. 11**

EP 4 712 493 A1

FIG. 12

**Server**

Server Application
- Server Engine
- Avatar Animation
- Avatar Creation
- Avatar Decoder

Server Scene Manager
- Virtual Scene Description
- Virtual Users

**Scene Description Database**

Virtual Scene 0
- Scene Description
- Interactivity System
- Avatar Container
- User Container

Virtual Scene N
- Scene Description
- Interactivity System
- Avatar Container
- User Container

**Network**

User/Avatar Interactions

Register user

Avatar AJIF Database
- AJIF 0
- AJIF n

**User 0**

User Device
- HDM glasses
- Holographic display
- VR headset
- AR headset

User Application
- Client Engine
- Avatar Animation
- Avatar Creation
- Avatar Decoder

User Interaction
- Body Movement
- Facial Movement
- Head Rotation (Virtual camera)
- Click Events (Action)

**User N**

User Device
- HDM glasses
- Holographic display
- VR headset
- AR headset

User Application
- Client Engine
- Avatar Animation
- Avatar Creation
- Avatar Decoder

User Interaction
- Body Movement
- Facial Movement
- Head Rotation (Virtual camera)
- Click Events (Action)

**FIG. 13**

**FIG. 14**

**FIG. 15**

FIG. 16

```
┌──────────────────────────────────────────────────────────────┐
│   OBTAINING AVATAR JSON INTERCHANGE FILE (AJIF) DATA           │
└──────────────────────────────────────────────────────────────┘
                              │
                              ▼
┌──────────────────────────────────────────────────────────────┐
│       DECODING THE AJIF DATA TO GENERATE AVATAR DATA           │
└──────────────────────────────────────────────────────────────┘
                              │
                              ▼
┌──────────────────────────────────────────────────────────────┐
│     OBTAINING ANIMATION PARAMETERS FROM THE AVATAR DATA        │
└──────────────────────────────────────────────────────────────┘
                              │
                              ▼
┌──────────────────────────────────────────────────────────────┐
│  OBTAINING USER MOVEMENT DATA CORRESPONDING TO A MOVEMENT OF   │
│                          A USER                                │
└──────────────────────────────────────────────────────────────┘
                              │
                              ▼
┌──────────────────────────────────────────────────────────────┐
│  GENERATING UPDATED AVATAR DATA BASED ON THE USER MOVEMENT     │
│                          DATA                                  │
└──────────────────────────────────────────────────────────────┘
                              │
                              ▼
┌──────────────────────────────────────────────────────────────┐
│     SENDING THE UPDATED AVATAR DATA TO A CLIENT DEVICE         │
└──────────────────────────────────────────────────────────────┘
```

# FIG. 17

GENERATING AVATAR JSON INTERCHANGE FILE (AJIF) DATA CORRESPONDING TO AN AVATAR

SENDING, TO AN APPLICATION SERVER, THE AJIF DATA

OBTAINING USER MOVEMENT DATA CORRESPONDING TO A MOVEMENT OF A USER

SENDING, TO THE APPLICATION SERVER, THE USER MOVEMENT DATA CORRESPONDING TO THE MOVEMENT OF THE USER

RECEIVING, FROM THE APPLICATION SERVER, SCENE UPDATE DATA, WHEREIN THE SCENE UPDATE DATA INCLUDES UPDATED AVATAR DATA CORRESPONDING TO THE MOVEMENT OF THE USER

RENDERING AN UPDATE TO A SCENE BASED ON THE RECEIVED SCENE UPDATE DATA

# FIG. 18

FIG. 19

## EUROPEAN SEARCH REPORT

**Application Number**

EP 24 30 6535

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | QUENTIN AVRIL (INTERDIGITAL) ET AL: "[SD] Update of the MPEG Reference Humanoid Avatar", 141. MPEG MEETING; 20230116 - 20230120; ONLINE; (MOTION PICTURE EXPERT GROUP OR ISO/IEC JTC1/SC29/WG11), , no. m62225 13 January 2023 (2023-01-13), XP030308042, Retrieved from the Internet: URL:https://dms.mpeg.expert/doc_end_user/d ocuments/141_OnLine/wg11/m62225-v1-m62225- EE6_Avatars_Annex_Morgan_v6.zip m62225-EE6_Avatars_Annex_Morgan_v6.docx [retrieved on 2023-01-13] * pages 1,3-4 * * pages 8-11 * * pages 15-16 * ----- -/-- | 1-14 | INV. H04N21/81 |

**TECHNICAL FIELDS SEARCHED (IPC)**

H04N

The present search report has been drawn up for all claims

| Place of search | Date of completion of the search | Examiner |
|---|---|---|
| Munich | 27 February 2025 | Folea, Octavian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    .....................................................................................
& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | "3rd Generation Partnership Project; Technical Specification Group Services and System Aspects ; Multimedia Codecs, Systems and Services; Avatar Representation and Communication; (Release 19)", 3GPP DRAFT; S4-241696, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 23 August 2024 (2024-08-23), XP052645960, Retrieved from the Internet: URL:https://www.3gpp.org/ftp/TSG_SA/WG4_CODEC/TSGS4_129-e/Docs/S4-241696.zip S4-241696_26.813_TR_on_Avatar_0.6.0_rm.docx [retrieved on 2024-08-23] * pages 18-31 * | 1-14 | |
| Y | JOAO REGATEIRO (INTERDIGITAL) ET AL: "[SD] Update of Annex to ISO/IEC 23090-14:2022 - MPEG Reference Humanoid Avatar", 142. MPEG MEETING; 20230424 - 20230428; ANTALYA; (MOTION PICTURE EXPERT GROUP OR ISO/IEC JTC1/SC29/WG11), , no. m62956 19 April 2023 (2023-04-19), XP030309903, Retrieved from the Internet: URL:https://dms.mpeg.expert/doc_end_user/documents/142_Antalya/wg11/m62956-v1-WG03_Update_of_Annex_H.zip WG03_Update_of_Annex_H.docx [retrieved on 2023-04-19] * the whole document * | 1-14 | **TECHNICAL FIELDS SEARCHED (IPC)** |

-----

-----

-/--

The present search report has been drawn up for all claims

| Place of search | Date of completion of the search | Examiner |
|---|---|---|
| Munich | 27 February 2025 | Folea, Octavian |

Europäisches Patentamt

European Patent Office

Office européen des brevets

**EUROPEAN SEARCH REPORT**

Application Number

EP 24 30 6535

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | IMED BOUAZIZI ET AL: "Storage format for Avatar representations", 145. MPEG MEETING; 20240122 - 20240126; ONLINE; (MOTION PICTURE EXPERT GROUP OR ISO/IEC JTC1/SC29/WG11), , no. m66576 18 January 2024 (2024-01-18), XP030316063, Retrieved from the Internet: URL:https://dms.mpeg.expert/doc_end_user/d ocuments/145_OnLine/wg11/m66576-v1-m66576. zip m66576_Avatar_storage.docx [retrieved on 2024-01-18] * page 1 * ----- | 1-14 | |

TECHNICAL FIELDS SEARCHED (IPC)

The present search report has been drawn up for all claims

| Place of search | Date of completion of the search | Examiner |
|---|---|---|
| Munich | 27 February 2025 | Folea, Octavian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23306745 A
- EP 23306756 A
- EP 24305094

**Non-patent literature cited in the description**

- **BERNERS-LEE, T et al.** Uniform Resource Identifier (URI): Generic Syntax. *STD 66, RFC 3986*, January 2005